# EUROPEAN PATENT APPLICATION

(11) **EP 4 708 287 A1**
(43) Date of publication of application: **11.03.2026**
(21) Application number: 25200267.0
(22) Date of filing: 04.09.2025
(51) Int. Cl.: G10L 15/22

(54) **METHOD OF CHANGING FEATURE OF HOME APPLIANCE, AND SERVER AND DEVICE IMPLEMENTING THE SAME**

(30) Priority: 05.09.2024 KR 20240120825; 01.04.2025 WO PCT/KR2025/004303
(71) Applicant: LG Electronics Inc., Yeongdeungpo-gu Seoul 07336 (KR)
(72) Inventor: LEE, Jung Hyub, 07796 Seoul (KR)
(74) Representative: Ter Meer Steinmeister & Partner

(57) **Abstract**

The present invention includes a first operation of generating, by a server or a home appliance, a first feature set and a first accuracy corresponding to a feature command, a second operation of generating, by the server or the home appliance, a second feature set and a second accuracy corresponding to the feature command using a theme module disposed in at least one of the server, the home appliance, or an external server when the first accuracy is a reference value or less, a third operation of generating, the server or the home appliance, a third feature set using personalized information corresponding to device information of the home appliance and the feature command when the second accuracy is the reference value or less, and a fourth operation of changing any one of the first feature set, the second feature set, or the third feature set to a feature of the home appliance.

## Description

### BACKGROUND

### [Technical Field]

The present invention relates to a method of changing a feature of a home appliance, and a server and device implementing the same.

### [Description of the Related Art]

Control methods for devices such as home appliances can be classified into a control method through direct human manipulation and a control method through natural language commands. In the case of the direct manipulation, a user can control the operation of the home appliance by manipulating a remote controller, buttons or dials on the home appliance, etc. In the case of the natural language command control, when the user inputs natural language commands to the home appliance, the home appliance recognizes and operates the commands.

However, the natural language commands uttered or input by the user vary from person to person, making it difficult to interpret and translate these commands into actual commands. In particular, the accuracy of natural language command interpretation is required depending on past command input habits and home appliance usage environment of each user.

Accordingly, the present specification describes a method and device for providing personalized services by adaptively receiving user commands and changing specific features of a home appliance.

### [SUMMARY OF THE INVENTION]

The present specification is intended to solve the above problems and is directed to implementing a method and device for processing commands by accurately reflecting user intent when processing voice commands to change features of electronic devices including home appliances.

In addition, the present specification enables the provision of personalized services by reflecting a user's preference when processing user commands.

In addition, the present specification is directed to providing various recognition methods for user commands to increase the accuracy of changing colors, functions, or voice prompts of home appliances.

Objects of the present invention are not limited to the above objects, and other objects and advantages of the present invention that are not described can be understood by the following description and will be more clearly understood by embodiments of the present invention. In addition, it will be able to be easily seen that the objects and advantages of the present invention may be achieved by devices and combinations thereof that are described in the claims.

According to a first aspect, a method of changing a feature of a home appliance according to one embodiment of the present invention is presented. The method includes a first operation of generating, by a server or a home appliance, a first feature set and a first accuracy corresponding to a feature command, a second operation of generating, by the server or the home appliance, a second feature set and a second accuracy corresponding to the feature command using a theme module disposed in at least one of the server, the home appliance, or an external server when the first accuracy is a reference value or less, a third operation of generating, the server or the home appliance, a third feature set using personalized information corresponding to device information of the home appliance and the feature command when the second accuracy is the reference value or less, and a fourth operation of changing any one of the first feature set, the second feature set, or the third feature set to a feature of the home appliance.

The feature set may include any one of a color set, a speech set, or a function set.

When the feature set is the color set, the feature command may be a color command, and when the color command includes color names of colors constituting the first color set, the first operation may include determining, by the server or the home appliance, that the first accuracy corresponds to the reference value.

Wherein the second operation may include inputting, by the server or the home appliance, a sample feature command and a sample feature set corresponding to the sample feature command to the theme module to generate the second feature set and the second accuracy corresponding to the feature command.

When the feature set is color set, the feature command may be a color command, and the personalized information corresponding to the device information may include information on one or more of a color set previously set in the home appliance corresponding to the device information, a frequency of the set color set, or a maintenance time of the set color set.

The method may further comprise: storing, by the server or the home appliance, the feature command and the second feature set in a database according to a maintenance time or the number of applications of the second feature set; and setting, by the server or the home appliance, the information stored in the database as the first feature set or the third feature set during the process of generating the first feature set or the third feature set in response to a feature command input after the fourth operation.

The method may further comprise: receiving, by the server or the home appliance, a fine-tuning command for any one of the first feature set, the second feature set, or the third feature set and generating a fourth feature set; storing the feature command and the fourth feature set in a database; and setting, by the server or the home appliance, the fourth feature set stored in the database in the home appliance during the process of generating the feature set in response to a feature command input after the fourth operation.

The method may further comprise: applying, by the server or the home appliance, any one of the first feature set, the second feature set, or the third feature set to another home appliance connected to a user account of the home appliance.

The method may further comprise: inputting by the server or the home appliance, at least one of the type of home appliance targeted by the feature command, configuration information of the home appliance or state information of the home appliance, the range of features that may be set for the home appliance, and sample control commands to the theme module.

A server according to one embodiment of the present invention includes a preprocessing module configured to receive a feature command input by a home appliance and generate a first feature set and a first accuracy corresponding to the feature command, a theme module configured to generate a second feature set and a second accuracy corresponding to the feature command when the first accuracy is a reference value or less, and a personalization module configured to generate a third feature set using personalized information corresponding to device information of the home appliance and the feature command when the second accuracy is the reference value or less, wherein the home appliance sets any one of the first feature set, the second feature set, or the third feature set as a feature of the home appliance.

A server according to another embodiment of the present invention includes a preprocessing module configured to receive a feature command input by a home appliance and generate a first feature set and a first accuracy corresponding to the feature command, a counter theme module configured to transmit the feature command to a theme module of a generative artificial intelligence (AI) external server and receive a second feature set and a second accuracy from the theme module when the first accuracy is a reference value or less, and a personalization module configured to generate a third feature set using personalized information corresponding to device information of the home appliance and the feature command when the second accuracy is the reference value or less, wherein the home appliance sets any one of the first feature set, the second feature set, or the third feature set as a feature of the home appliance.

A device according to one embodiment of the present invention includes a command input module configured to receive a feature command, a preprocessing module configured to receive the feature command and generate a first feature set and a first accuracy corresponding to the feature command, a theme module configured to generate a second feature set and a second accuracy corresponding to the feature command when the first accuracy is a reference value or less, a personalization module configured to generate a third feature set using stored personalized information and the feature command when the second accuracy is a reference value or less, and a feature setting module configured to set any one of the first feature set, the second feature set, or the third feature set as a feature.

According to another aspect is presented, a method of changing a feature of a home appliance including one or more processors for processing information received from a home appliance, inputting the information to a theme module, which is a generative artificial intelligence (AI) model, to acquire a result according to another embodiment of the present invention includes receiving, by the processor, a feature command instructing a feature change of a first home appliance from the first home appliance or a second home appliance, generating, by the processor, a prompt including the feature command and configuration information of the first home appliance corresponding to the feature command, inputting, by the processor, the prompt to the theme module to acquire a result, and converting, by the processor, the result into a first feature set to be set in the first home appliance.

The feature command may be a command instructing a change in a color of the first home appliance, and the first feature set includes information on one or more colors to be set in the first home appliance.

The configuration information may be information on a region of the first home appliance to which the one or more colors are to be set, and the state information includes information on a second feature set currently or previously set in the first home appliance.

The result may include two or more candidate feature sets, and the method comprises applying, by the processor, one or more of the configuration information, the state information, and the feature command and converting one of the two or more candidate feature sets into the first feature set.

The method may further comprise transmitting, by the processor, the first feature set to the first home appliance or transmitting a feature control command to apply the first feature set to the first home appliance to the first home appliance.

According to one embodiment of the present invention, there is provided a storage medium installed in a server or a home appliance and including a preprocessing module, a personalization module, and any one of a theme module or a counter theme module, wherein the preprocessing module generates a first feature set and a first accuracy corresponding to a feature command, the theme module generates a second feature set and a second accuracy corresponding to the feature command when the first accuracy is a reference value or less, the counter theme module transmits the feature command to a theme module of a generative artificial intelligence (AI) external server when the first accuracy is the reference value or less and receives the second feature set and the second accuracy from the theme module, the personalization module generates a third feature set using personalized information corresponding to device information of the home appliance and the feature command when the second accuracy is the reference value or less, and the storage medium controls the home appliance to set features of the home appliance.

When the present invention is applied, it is possible to implement the method and device for processing commands by accurately reflecting user intent when processing voice commands to change the features of the home appliance.

When the present invention is applied, it is possible to provide the personalized services by reflecting the user's preference when processing user commands.

When the present invention is applied, it is possible to increase the accuracy of changing the colors, functions, or voice prompts of the home appliance by providing various recognition methods user commands.

Effects of the present invention are not limited to the above effects, and various effects of the present invention can be easily derived from the configuration of the present invention.

### [BRIEF DESCRIPTION OF THE DRAWINGS]

FIG. 1 is a view showing a process in which a home appliance changes features according to a feature command being input according to one embodiment of the present invention.
FIG. 2 is a view showing a process in which a home appliance transmits a feature command to a server according to the feature command being input, receives a feature set from the server, and changes features of the home appliance.
FIG. 3 is a view showing a process in which the server or the home appliance generates a feature set according to one embodiment of the present invention.
FIG. 4 is a view showing a process in which the server processes the feature command according to one embodiment of the present invention.
FIG. 5 is a view showing a process of processing a color command according to one embodiment of the present invention.
FIG. 6 is a view showing a configuration of a personalization module according to one embodiment of the present invention.
FIG. 7 is a view showing a process in which the personalization module uses personalized information to make recommendations according to one embodiment of the present invention.
FIG. 8 is a view showing a process of generating a feature set based on a theme module (320) according to one embodiment of the present invention.
FIG. 9 is a view showing a processing process when fine-tuning a feature set occurs according to one embodiment of the present invention.
FIG. 10 is a view showing a configuration including all components within the home appliance according to one embodiment of the present invention.
FIG. 11 is a view showing a server including a preprocessing module, a theme module, a personalization module, and a database according to another embodiment of the present invention.
FIG. 12 is a view showing a server including a preprocessing module, a personalization module, and a database according to still another embodiment of the present invention.
FIG. 13 is a view showing a configuration of a home appliance, a home appliance for voice processing, and a server according to one embodiment of the present invention.
FIG. 14 is a view showing an interface for changing colors in response to user input commands according to one embodiment of the present invention.
FIG. 15 is a view showing a process of changing colors of a plurality of home appliances according to one embodiment of the present invention.
FIG. 16 is a view showing a process of changing features of a home appliance according to one embodiment of the present invention.

### [DETAILED DESCRIPTION OF THE INVENTION]

Hereinafter, embodiments of the present invention will be described in detail with reference to the accompanying drawings so that those skilled in the art to which the present invention pertains can easily carry out the present invention. The present invention may be implemented in various different forms and is not limited to the embodiments described herein.

In order to clearly describe the present invention, parts not related to the description have been omitted, and the same or similar components are denoted as the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present disclosure, when it is determined that a detailed description of a related known configuration or function may obscure the gist of the present disclosure, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

Hereinafter, the home appliance described herein is a device including an electronic product. The home appliance may be disposed in homes, offices, or the like and moved and disposed in other locations by people.

In addition, the home appliance described herein may include electronic devices, for example, user terminals, such as a smartphone, a tablet, an iPad, etc. In addition, a hub (e.g., an artificial intelligence (AI) speaker) that may communicate with and control various electronic devices based on wired/wireless communication may also correspond to the home appliance.

In addition, the device described herein, for example, the home appliance, may apply a specific feature set to change a portion of an exterior of the home appliance or modify some elements of its operation.

The feature set includes sub-concepts such as a color set, a speech set related to tone, voice, and the like, a function set related to functions in the operation of the home appliance, etc.

The feature set may include a set of information, such as each feature and its corresponding region, function, etc. For example, the feature set may be formed as follows:
{{first feature information, second feature information, ..., n^{th} feature information},
{first application region, second application region, ..., n^{th} application region}}

Alternatively, the feature set may be formed as follows:
{{first feature information, first application region},
{second feature information, second application region}, ...,
{n^{th} feature information, n^{th} application region} }

When the application region is predetermined based on the order of the feature information, information on the application region may be omitted from the feature set. For example, when the generative AI module is embedded within the home appliance, such as an on-device, the information on the application region of the home appliance having the generative AI is known, and thus the information on the application region may be omitted.

First, the color set (or illumination set) will be described.

The home appliance may include a light source module which can produce/generate light of one or more colors, and/or of variable brightness, and wherein one or more parts of the home appliance may be illuminated by the light produced/generated by the light source, for example as described in the present specification the home appliance may change an exterior color according to a specific color set. The color set is a color information indicating one or more colors, and information referring to or identifying a specific region/part of the home appliance, e.g. exterior of the home appliance or part of the exterior of the home appliance, to which the one or more color indicated by the color information is/are applied or which is illuminated by the one or more color indicated by the color information.

In one embodiment, the color set has the following structure of color information to be applied to n regions of the home appliance. The color information and the region information may be clustered separately.

{{first color information, first region}, {second color information, second region}, ... {n^{th} color information, n^{th} region} }

For example, when a color set to be applied to a refrigerator door or front panel of the refrigerator is { {#093337, LEFT} and {#093537, RIGHT} }, an RGB color value "093337" may be applied to a left door/panel of the refrigerator, and an RGB color value "093537" may be applied to a right door/panel of the refrigerator. The color set of the present invention may be applied to various home appliances (an air conditioner, a styler, a digital photo frame, and the like) in which a light source module, such as a light emitting diode (LED) or the like, is disposed in addition to a refrigerator in which the light source module, such as the LED or the like, is disposed and door panels of the refrigerator may be identified. In addition, by linking home appliances, the same or similar color theme/scheme may be applied to all home appliances.

The color information may be RGB values (hexadecimal) in one embodiment, but the present invention is not limited thereto. For example, three hexadecimal digits of color information may indicate 16 levels for each of R, G, and B. Alternatively, specific color names may correspond to color information. For example, color information such as "RED1," "RED2," ..., "ORANGE1," ..., "BLUE1," and the like may also constitute the color set. Additionally or alternatively, the color information may be a brightness value for example from a value between 1% to 100%.

Next, the speech set (or voice set or home appliance sound or voice set) will be described.

The home appliance may include a sound source module which can produce/generate sounds e.g. one or more type of voices and/or corresponding loudness levels for example he home appliance described herein may change a tone, intonation, gender, pitch, and the like of a guidance voice (i.e. a voice or sound pattern used to announce an information relating to the home appliance e.g. a state of the home appliance, a confirmation of receipt of a command/instruction by the home appliance, information of completion of a function by the home appliance, and so on and so forth, and a combination thereof) according to a specific speech set. The speech set is information indicating features of a voice guidance message e.g. a voice or speech information (i.e. one or more voices used by the appliance to make an announcement) and announcement information (i.e. the information to be announced in a corresponding/selected voice).

In one embodiment, the speech set i.e. voice or speech information may set the tone, intonation, gender, and the like of the voice message provided by the home appliance and the corresponding message (i.e. announcement information) output by the home appliance as follows:
{ {first speech information, first voice message},
{ {second speech information, second voice message}, ...,
{n^{th} speech information, n^{th} voice message} }

For example, a speech set to be applied to an air conditioner may be set as follows when the message (announcement information) indicating the on/off of the air conditioner (on-off message) is announced in a first voice message (voice or speech information) and a message (announcement information) indicating a temperature or wind direction of the air conditioner (operation message) is announced in a second voice message (voice or speech information).

{ {Iron Man, on-off message}, {Elsa, operation message} }

In this case, turning the air conditioner on or off may be guided or announced by the home appliance by a voice of Iron Man, and the operating message such as notifying temperature or changing airflow during the operation of the air conditioner would be guided or announced by the home appliance by Elsa's voice.

Next, the function set (or operation set) will be described.

The home appliance described herein may control the operation of the home appliance according to a specific function set. The function set is information that allows a user to specifically define one or more of home appliances, and/or to specifically define, or configure or instruct the home appliance to execute, one or more functions or operations of home appliance. A function set is the information required for a user to configure the functions of one or more specific home appliances.
{ {first function information, first function},
{second function information, second function}, ...,
{n^{th} function information, n^{th} function} }

For example, in order to set an input source for a TV, the function set may be defined as follows:
{{YouTube, YouTube connection},
{Netflix, Netflix connection},
{Cinebeam, projector connection},
{move to feel-good channel, pet channel}}

When a user speaks or inputs specific function information or selects function information displayed on the TV, the home appliance may provide the corresponding function.

In the above configurations of various feature sets (i.e. color set, speech set and function set), the user needs to input voice or text information to the home appliance to set or select a specific feature set. Additionally (optionally) such information may exceed a range of standardized information predefined for the home appliance, for example there may be standardized or intended or preprogrammed or default voice commands for setting specific features (e.g. one or more of color, speech and function), and the user may use such standardized information, but the user may also use information exceeding or different from the standardized information for example user may provide a voice command using different words than standardized information.

That is, it is necessary to configure the feature set(s) so that the user intent is reflected even when the user inputs various types/deviations of voice/text.

Accordingly, the invention may include a process of analyzing the voice input by the user and combining the corresponding results of the generative AI with the personal information of the user in order to provide an appropriate feature set.

The feature commands described herein are commands or prompts or inputs for the home appliance that specify or select or implement or change features (e.g. one or more of color, speech and function) via voice or text. The feature commands may also be referred to as voice and/or text commands. The feature commands may be voice command(s) or text commands or a mix of voice and text commands. However, for convenience of description, the description focuses on voice commands for exemplary purposes and without limiting the present invention to voice commands only.

In the present specification, feature command processing may be performed by both the home appliance and the server device. Examples of the feature commands include color commands, speech commands, and function commands. A home appliance, a server device (server), or a system composed of one or more devices may store hardware or software for processing feature commands. In addition, the home appliance, the server device (server), or the system composed of one or more devices may receive and execute software for processing feature commands from a remote third device. Processing feature commands using hardware embedded in the device, software stored within the device, or executable software transmitted may be performed by a processor within each device. Alternatively, these hardware or software may operate as processors.

A language model described herein is a large language model (LLM) in one embodiment, and the language model may be embedded within a home appliance or a server device. Alternatively, the language model may be embedded in an external device, and in this case, the home appliance or the server device may acquire the result of the language model through the external device.

The personalized information described herein includes information generated during the use of the home appliance. In addition, the personalized information according to one embodiment of the present invention includes information generated during the use of other home appliances used by the user of the corresponding home appliance. The personalized information according to another embodiment of the present invention includes information generated during the use of other home appliances disposed in the same space as the corresponding home appliance.

For example, the personalized information applied during the process of changing the color of the refrigerator may include information generated during the use of the air conditioner in a space in which the corresponding refrigerator is disposed. Likewise, the personalized information applied during the process of changing the color of the air conditioner may include information generated during the use of the refrigerator by the user of the corresponding air conditioner or of the air conditioner previously used by the corresponding user.

In addition, the personalized information applied during the process of changing the voice guidance message of the refrigerator includes information generated during the use of the air conditioner in the space in which the corresponding refrigerator is disposed. Likewise, the personalized information applied during the process of changing the voice guidance for an air conditioner includes information generated during the use of the refrigerator by the user of the air conditioner or of the air conditioner previously used by the user.

Likewise, in a home with two air conditioners, the personalized information applied during the process of changing the function of a first air conditioner includes information generated during the use of a second air conditioner in a space in which the first air conditioner is disposed. Likewise, the personalized information applied during the process of changing the function of the second air conditioner includes information generated during the use of the refrigerator or the first air conditioner by the user of the first air conditioner.

In addition, a first home appliance, which is instructed to change a feature of the first home appliance or a second home appliance, may directly receive a voice or text command and process or transmit the commands to a server. Alternatively, the second home appliance, separate from the first home appliance instructed to change a feature, may directly receive the voice or text command and process or transmit the commands to the server.

The home appliance may be understood as any (home) appliance which performs one or more function/operation, or which includes a light source module (one or more) to produce/generate light of one or more colors, and/or of variable brightness, to illuminate one or more parts of the home appliance, or which includes a sound source module (one or more) to produce/generate sounds (e.g. one or more type of voices and/or loudness levels) to make announcement(s), or a combination thereof (i.e. may perform one or more function/operation and include one or both of the light source module and sound source module),

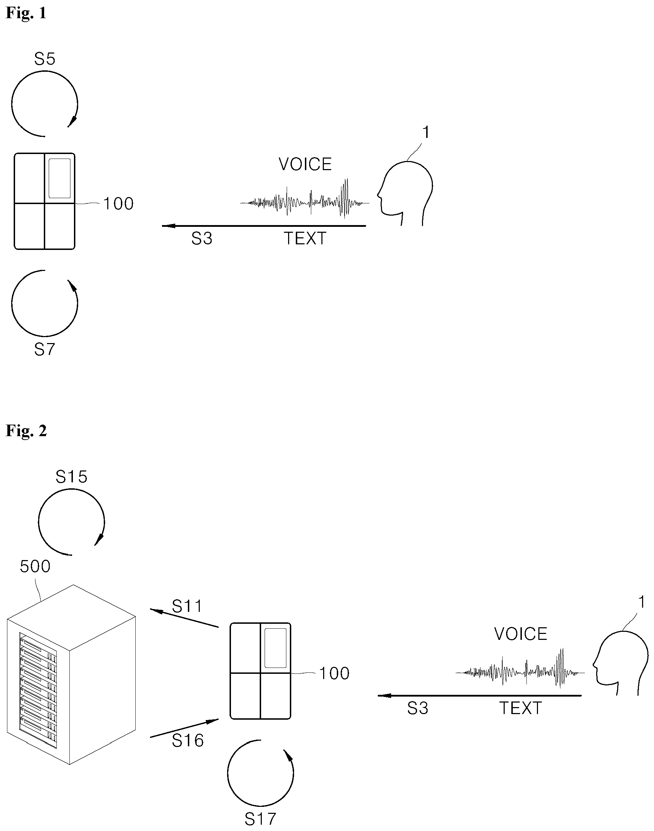

FIG. 1 is a view showing a process in which a home appliance changes features according to a feature command being input according to one embodiment of the present invention.

A user 1 inputs a command (voice or text) to a home appliance 100 (S3). Alternatively, the user may input the command through a hub that is connected to and controls multiple electronic devices, such as a mobile terminal or AI speaker, in addition to the home appliance. The command may be input via voice or text. The home appliance (device) 100 determines a feature set corresponding to the command based on the preprocessed result of textualizing the input feature command (S5). In order to determine the feature set, the home appliance 100 may perform a feature set generating process of up to three operations. Once a feature set is determined through the feature set generating process, the determined feature is set or applied or implemented in the home appliance 100 (S7).

FIG. 2 is a view showing a process in which a home appliance transmits a feature command to a server according to the feature command being input, receives a feature set from the server, and changes features of the home appliance.

The description of S3 is the same as the descriptions previously provided in FIG. 1. The home appliance 100 transmits the input feature command to a server 500 (S11). In this case, when the input command is a voice command, the home appliance 100 may convert the voice command into text and transmit the feature command, which is the result of preprocessing the text, to the server 500.

In this case, the server 500 may determine a feature set corresponding to the received feature command (S15). The preprocessing process may be performed by the server 500. In this case, the home appliance 100 may transmit the input command directly to the server 500.

In order to determine the feature set, the server 500 may perform the feature set generating process of up to three operations. Once a feature set is determined through the feature set generating process, the server 500 transmits information on the determined feature set to the home appliance 100 (S16), and the received feature is set in the home appliance 100 (S17).

As shown in FIGS. 1 and 2, the server 500 or the home appliance 100 may generate an appropriate feature set for the preprocessed feature command. Accordingly, the feature set generating process performed by the server 500 or the home appliance 100 will be described.

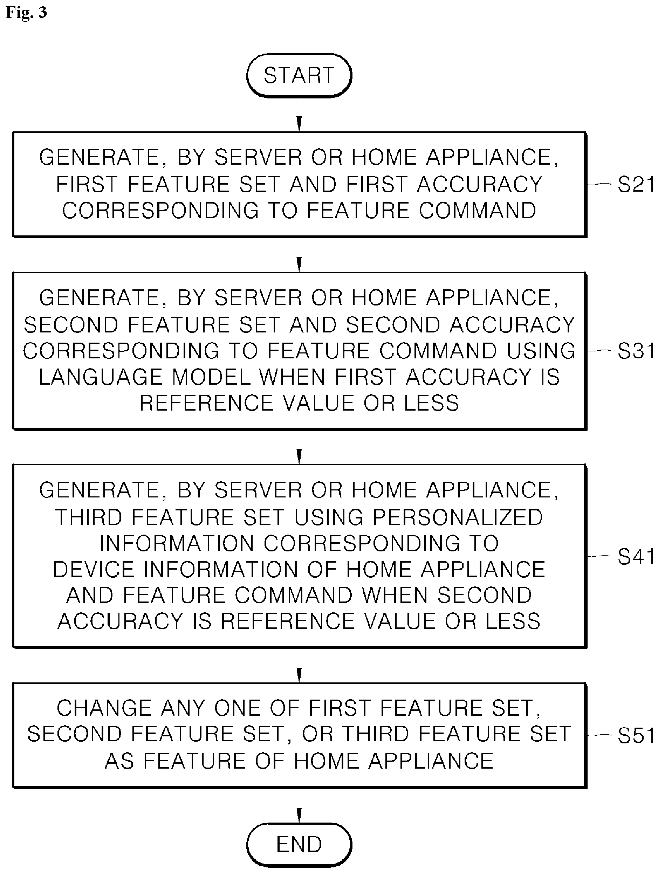

FIG. 3 is a view showing a process in which the server or the home appliance generates a feature set according to one embodiment of the present invention. The process of FIG. 3 may be performed by either the server 500 and the home appliance 100 i.e. the process of FIG. 3 is applicable to each of the FIGs 1 and 2.

The server 500 or the home appliance 100 receives a feature command e.g. a voice command and generates a first feature set corresponding to the feature command (S21) and a first accuracy (value) corresponding to the feature command (S21). The first feature set corresponding to the feature command is a feature set in which the feature command corresponds to the name of a specific feature set or to the name of a feature.

That is, the feature set includes one or more feature information and information on a region, area (section, part) or function of a device in which the feature information will be set. When the feature set is a color set, the feature set may include color information and a region, area (section, part)/function to which the color will be applied. When the feature set is a speech set, the feature set may include speech information and a region, area (section, part)/function or operation or announcement to which the speech will be applied. When the feature set is a function set, the feature set may include function information, a situation to which the function will be applied, etc.

For example, a color set that is an example of the feature set is shown in Table 1.

**[Table 1]**

| Name | Color set |
|---|---|
| Orange color | {Color1, Color2, Color3}, {Region1, Region2, Region3} |
| Sky color | {Color11, Color12, Color13}, {Region1, Region2, Region3} |
| Green color | {Color21, Color22, Color23}, {Region1, Region2, Region3} |

In Table 1, when the color command uttered by the user includes color names of the colors constituting the first color set, this indicates that the user has accurately uttered a specific feature set (color set), and thus the server 500 or the home appliance 100 may extract a color set corresponding to the color command. Consequently, in an operation S31, the server 500 or the home appliance 100 determines that the result corresponding to the color command and the accuracy of that result (e.g., the first accuracy) meet criteria.

For example, in a state in which the server 500 or the home appliance 100 stores the contents of Table 1, when a color command uttered by the user is a slightly modified color command, such as "tangerine," "green," "turquoise," or the like, the server 500 or the home appliance 100 may compare similarity between the color command and the names in Table 1 to generate an accuracy of 90 or higher. Assuming that a first accuracy criterion is 85, the server 500 or the home appliance 100 may extract a color set corresponding to the color command from the stored color set in Table 1.

As another example, a speaker set that is an example of the feature set is shown in Table 2.

**[Table 2]**

| Name | Speech Set |
|---|---|
| Female adult voice | {Female_Tone1, Female_Tone2}, {Air Conditioner_On/Off, Air Conditioner_Temperature Control} |
| Boy voice | {Male_Tone1, Male_Tone2}, {Air Conditioner_On/Off, Air Conditioner_Temperature Control} |

For still another example, a function set that is an example of the feature set is shown in Table 3.

**[Table 3]**

| Name | Function set |
|---|---|
| Summer_Heat_Temperature | {Temperature1, Airflow1}, {Air Conditioner_Temperature, Air Conditioner_Airflow} |
| Early_Summer_Temperature | {Temperature2, Airflow2}, {Air Conditioner_Temperature, Air Conditioner_Airflow} |

In addition to the above embodiment, the following function sets may be set as follows.

As an example of a feature set applicable to a refrigerator, {Refrigerator_Temperature1, Freezer_Temperature2} may be set under the name "Summer_Heat_Refrigerator." As an example of a feature set applicable to a refrigerator, {Refrigerator_Temperature3, Freezer_Temperature4} may be set under the name "Autumn_Appropriate Temperature_Refrigerator."

As an example of a feature set applicable to an air conditioner, {Air Conditioner_Temperature1, Wind Speed_1, Time Information_1} may be set under the name "Cool_Before Bed." As an example of a feature set applicable to an air conditioner, {Air Conditioner_Temperature2, Wind Speed_2, Time Information_2} may be set under the name "Wake Up_in the Morning."

In Table 1, Color1, 2, ... represent specific colors, for example, RGB values as an example. Region1, 2, ... represent information on a region in which Color1, Color2, ... will be applied. For example, a color set of {{Color1, Color2, Color3, Color4}, {Region1, Region2, Region3, Region4} } is information indicating that Color1 is applied to Region1, Color2 is applied to Region2, Color3 is applied to Region3, and Color4 is applied to Region4. When the order of the regions is applied to the order of the color information constituting the color set, the region information may be omitted. In an operation S21, the first accuracy may be generated based on the degree of correspondence between the feature command and the feature set/feature information.

For example, in the case of the color set, the first accuracy may be generated based on the degree of correspondence between the color command and the color set/color information. When the color command is "Set the refrigerator color as orange" (Case 1) and "Set the refrigerator color as tangerine" (Case 2), the server 500 or the home appliance 100 may generate a color set that is an orange-based theme color identically for both color commands.

However, in Case 1, the color command and name are the same, but in Case 2, the color command "tangerine" is not completely the same as the name in Table 1. Accordingly, the server 500 or the home appliance 100 may generate a first color set as the result value for the two color commands, but may generate different accuracies. For example, in Case 1, the generated accuracy may be 100, and in Case 2, the generated accuracy may be 80.

Likewise, in the case of the speech set, the first accuracy may be generated based on the degree of correspondence between the speech command and the speech set/speech information. When the speech command is "Change the air conditioner voice to an adult female voice" (Case 1) and "Change the air conditioner voice to a girl's voice" (Case 2), the server 500 or the home appliance 100 may generate different speech sets for the two speech commands.

That is, in Case 1, the speech command and the speech information have the same name, but in Case 2, since the name is "girl," two cases, that is, "female adult" and "boy," may be generated, resulting in a decrease in accuracy. For example, in Case 1, the generated accuracy may be 100, and in Case 2, the generated accuracy may be 80.

Similar to the color set/speech set, the accuracy for the function set is generated differently depending on whether the voice utterance of the user accurately matches the name.

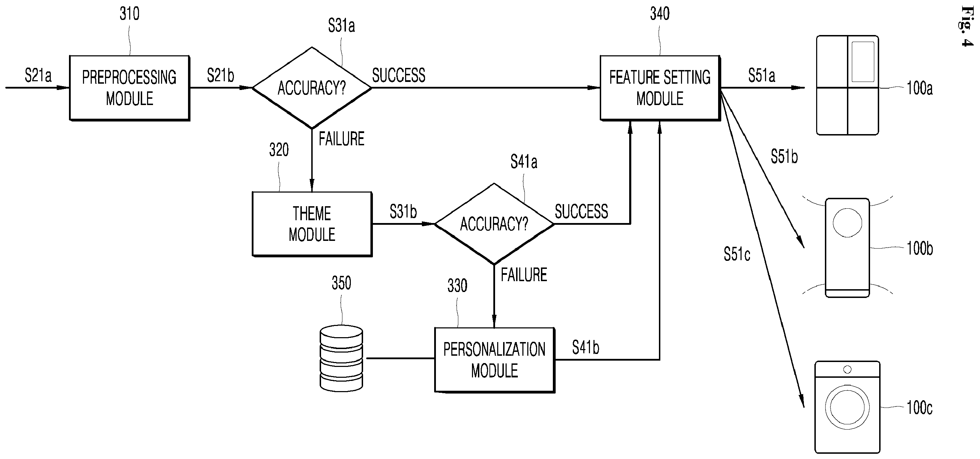

Accordingly, when the first accuracy is a reference value or less, the server 500 or the home appliance 100 uses a theme module (e.g., a language model) to generate a second feature set and a second accuracy corresponding to the feature command (S31). The theme module may be disposed within the server 500, the home appliance 100, or an external language model server. The theme module may also be referred to as a LLM module (Large language model module) or a generative AI module (generative artificial intelligence module). The following description will be made with reference to FIG. 4.

A case in which the first accuracy is the reference value or less means that a specific feature set cannot be derived from the predefined name-feature set as shown in Tables 1, 2, and 3.

For example, in Table 1 and the example of the color command, the user may input a command such as "Change the refrigerator color to Iron Man." In order to form the feature set, information on a color represented by the character "Iron Man" is required, and the server 500 or the home appliance 100 cannot generate a result corresponding to the color command using the information in Table 1.

Accordingly, in this case, the first accuracy is 0 or a very low value, and in the operation S31, the server 500 or the home appliance 100 inputs a feature command (e.g., a color command) to a language model, for example, an LLM and generates a corresponding second feature set (e.g., a second color set) and second accuracy (S31).

The second accuracy may be calculated by the theme module 320 using an LLM as an example. In this case, the second accuracy may include two results, such as success or failure, or three results, such as success, neutral, and failure.

The first accuracy may be a value used to determine whether the corresponding command corresponds to a content stored in a database.

While the theme module 320, which uses the LLM as an example, processes data, a result with a second accuracy of 0 (e.g., a failure result) may be generated when data is not output or a range of features is not applicable to the corresponding device (e.g., in the case of a refrigerator, an unavailable color is output). This corresponds to a process of generating the second accuracy to avoid using a result that cannot be output or is inapplicable while the LLM processes a prompt.

When the prompt instructs the LLM to output two values, such as success or failure, as the accuracy of the result, the second accuracy may be output as one of values 0 and 100 (or a number such as 1).

When the prompt instructs the LLM to output three values, such as success, neutral, or failure, as the accuracy of the result, the second accuracy may be output as one of values 0, 50 (or a number such as 0.5), or 100 (or a number such as 1).

Alternatively, the server 500 or the home appliance 100 rather than the theme module may determine the accuracy (success/failure) using the results generated by the theme module.

In addition, in Table 2 and the example of the speech command, the user may input a command such as "Change the air conditioner voice to the old professor voice." In order to form a feature set, information on the voice of the "old professor" character is required, and the server 500 or the home appliance 100 cannot generate a result corresponding to the speech command using the information in Table 2.

Accordingly, in this case, the first accuracy is 0 or a very low value, and in the operation S31, the server 500 or the home appliance 100 inputs a feature command (e.g., a speech command) to a language model, for example, an LLM and generates a corresponding second feature set (e.g., a second color set) and second accuracy (S31).

Similar to the color set/speech set, the accuracy of the feature set is generated to be the reference value or less when the user does not utter a voice that accurately corresponds to the name.

Here, the second accuracy is accuracy information generated by the LLM as an example. For example, when entering a prompt in LLM, the prompt may indicate that the accuracy of the information produced by the prompt should also be calculated when producing the results.

The language model used in the present invention includes a language model such as ChatGPT, which is an example of LLM. In addition, the language model used in the present invention may be a language model specialized for generating a feature set. The language model may be embedded and executed within the server device 500 or the home appliance 100. Alternatively, the language model may be disposed to be executed outside the server device 500 or the home appliance 100 and may generate results through prompt input.

When commands are simply applied to a generative AI, such as an LLM, without the above prompts, the desired results cannot be generated depending on factors such as the number of home appliance panels, the type of home appliance, or the like, and thus in the embodiments of the present invention, prompts are input to the generative AI such as an LLM, and the prompts may include various information.

Various data that the prompt may include, that is, data included in the prompt may include identification information on the home appliance of the user and configuration information of the home appliance of the user. For example, the identification information on the home appliance is information on a home appliance registered to a server, a home appliance registered to the user's account within the server, and the like as a device the user actually owns in one embodiment.

In addition, important information for each home appliance may be included in the prompt to set an accurate feature set. The input data required to generate a function set for the operation of the refrigerator may include user input commands, refrigerator-related information (such as a refrigerator unit of the user, an installation location of the refrigerator, whether the refrigerator has a refrigerator/freezer compartment, and the number of doors of the refrigerator), and a current status of the refrigerator (such as power on/off status, current storage temperature setting, type of items stored, the number of times the door was opened or closed over the past day, etc.). Consequently, the temperature of the refrigerator can be controlled more accurately.

The input data required to generate a function set for the operation of an air conditioner may include user input commands, air conditioner-related information (such as an air conditioner unit of the user, an installation location of the air conditioner), and a current status of the air conditioner (such as power on/off status, current temperature and air direction settings, air conditioner manipulation information over the past day, etc.). Consequently, the wind speed or direction of the air conditioner can be controlled more accurately.

Meanwhile, the home appliance may transmit specific information of a home appliance, component-related information, and state information to the server, or the home appliance may store the corresponding information and then provide the information to the preprocessing module 310 or the theme module 320. In addition, the home appliance may identify command utterance recognition and transmit recognized commands between home appliances. For example, when a refrigerator-related command is input to an oven, the oven may transmit the input command to the refrigerator.

That is, the server or the home appliance may input information on the type of home appliance targeted by the feature command, configuration information or state information of the home appliance, the range of features that may be set in the home appliance, and sample control commands to the theme module 320. Consequently, the theme module 320 may generate results appropriate for various characteristics of the home appliance.

The personalization module 330, which is an example of the recommendation AI module, may store personal information, such as a user's history of using home appliances and the like, and generate a personalized feature set using the stored personal information.

When the second accuracy is the reference value or less in the operation S31, the server 500 or the home appliance 100 generates a third feature set using personalized information and feature commands corresponding to the device information of the home appliance (S41). The device information may include at least one of the identification information of the home appliance whose features will be changed and the type of the device (a refrigerator, an air conditioner, or the like). In addition, the personalized information is, for example, information on the feature set that has been set for the home appliance. Alternatively, information generated while the corresponding user uses another home appliance may also be included in the personalized information.

Next, the server 500 or the home appliance 100 changes or sets or implements or updates one of the first feature set, the second feature set, or the third feature set to the feature of the home appliance (S51). Consequently, for example, the exterior color of the home appliance may be changed based on the user intent.

In one embodiment, the server 500 or the home appliance 100 may determine whether to use the first feature set or the second feature set using the first accuracy and the second accuracy. When both the first and second accuracies are low, the third feature set may be used.

In another embodiment, the server 500 or the home appliance 100 may select a feature set similar to a feature set previously used by the user among the three feature sets generated after performing the operations S21, S31, and S41.

To summarize an exemplary embodiment, when a feature set (e.g. color, voice, function) is to be applied to (or updated or changed or implemented on) the home appliance, the user provides/inputs a feature command to the home appliance (i.e. voice and/or text command). The feature command includes information (e.g. different words) regarding or indicating the feature set to be applied.

When the feature command inputted/provided by the user is voice command, the words of the voice command may be optionally converted/processed to text. This step may be optional even when the feature command inputted/provided by the user is voice command.

The home appliance 100 and/or the server 500 includes a set or a database of one or more standardized feature commands and a feature set corresponding to each of the standardized feature commands (e.g. a plurality of standardized feature commands and a plurality of corresponding feature sets). The standardized feature commands include preset or standardized or default or predefined words therein - for each standardized feature command.

The feature command inputted/provided by the user is compared with the standardized feature commands by the home appliance/server. Specifically, the words of the feature command inputted/provided by the user and the standardized words of the standardized feature commands are compared. As a result of the comparison either there is a match/overlap (partial or complete) or no match i.e. there is a match between the feature command inputted/provided by the user and one of the standardized feature commands based on the above-mentioned comparison. The feature set (of the set or database of the home appliance 100 and/or the server 500) corresponding to the matched (partial or complete) standardized feature command is determined to be the first feature set.

When there is a match a degree/level of match is determined i.e. accuracy of match, referred to as the first accuracy i.e. first accuracy corresponding to the first feature set. For example, when all the words match the standardized words of one of the standardized feature commands, the first accuracy may be said to be 100 percent (any other scale may be used besides percentage, e.g. scale of 1 to 5 or scale with 'low', 'middle', 'high' and like quantifiers/qualifiers/parameters), or when some of the words match the standardized words, the first accuracy may be said to be 60 percent or 80 percent, etc. (depending on degree of match/overlap).

Thus, based on the comparison of the feature command inputted/provided by the user and the one of the standardized feature commands of the home appliance or server, the first feature set and the first accuracy is determined. This is referred to as the first operation.

When the first accuracy of the first feature set is higher than or greater than a reference value or threshold value (e.g. a first reference value), the first feature set is implemented or applied, by the home appliance or the server, to the home appliance. This is referred to as the fourth operation or final operation or implementing operation.

On the other hand, when the first accuracy of the first feature set is equal to or lower than or smaller than the reference value or the threshold value (e.g. the first reference value say 50 percent or more), or when there is no match i.e. no first feature set was determined or recognized, then the second operation is performed.

In the second operation, the feature command inputted/provided by the user, is provided to a theme module e.g. a LLM which may be stored either locally i.e. on the home appliance 100 or on the server 500 or another server, and a corresponding feature command is generated by the theme module. In other words, based on words of the feature command inputted/provided by the user, a corresponding feature command is generated by the theme module. The corresponding feature command generated by the theme module may include alternative or comparable or suggested words for or instead of the words of the feature command inputted/provided by the user.

The feature command generated by the theme module is compared with the standardized feature commands by the home appliance/server. Specifically, the words (e.g. generated words) of the feature command generated by the theme module and the standardized words of the standardized feature commands are compared. As a result of the comparison either there is a match/overlap (partial or complete) or no match i.e. there is a match between the feature command generated by the theme module and one of the standardized feature commands based on the above-mentioned comparison. The feature set (of the set or database of the home appliance 100 and/or the server 500) corresponding to the matched (partial or complete) standardized feature command is determined to be the second feature set.

When there is a match a degree/level of match is determined i.e. accuracy of match, referred to as the second accuracy i.e. second accuracy corresponding to the second feature set. For example, when all the words (e.g. generated words) match the standardized words of one of the standardized feature commands, the second accuracy may be said to be 100 percent (any other scale may be used besides percentage, e.g. scale of 1 to 5 or scale with 'low', 'middle', 'high' and like quantifiers/qualifiers/parameters), or when some of the words (e.g. generated words) match the standardized words, the second accuracy may be said to be 60 percent or 80 percent, etc. (depending on degree of match/overlap).

Thus, based on the comparison of the feature command generated by the theme module and the one of the standardized feature commands of the home appliance or server, the second feature set and the second accuracy is determined. This is referred to as the second operation.

When the second accuracy of the second feature set is higher than or greater than a reference value or threshold value (e.g. a second reference value), the second feature set is implemented or applied, by the home appliance or the server, to the home appliance. This is referred to as the fourth operation or final operation or implementing operation.

On the other hand, when the second accuracy of the second feature set is equal to or lower than or smaller than the reference value or the threshold value (e.g. the second reference value say 50 percent or more), or when there is no match i.e. no second feature set was determined or recognized, then the third operation is performed.

In the third operation, the feature command inputted/provided by the user, is provided to a personalization module, e.g. a predictive model or recommendation AI, which may be stored either locally i.e. on the home appliance 100 or on the server 500 or another server, and a corresponding feature command is generated by the personalization module. The personalization module may include personalization information such as user preferences prestored/provided by the user, or derived from user's history of previous use(s) of the home appliance or other home appliances, and/or user's personal data, etc. and may generate the corresponding feature command based thereon. The personalization module may also be referred to as user preference prediction module.

In other words, based on words of the feature command inputted/provided by the user and/or of the feature command generated by the theme module, and the personalization information a corresponding feature command is generated by the personalization module. The corresponding feature command generated by the personalization module may include alternative or comparable or suggested words for or instead of the words of the feature command inputted/provided by the user. The feature command generated by the personalization module are generated by the personalization module to include words that match the standardized words of one of the standardized feature commands.

The feature command generated by the personalization module is compared with the standardized feature commands by the home appliance/server, and as a result of the comparison the third feature set is determined i.e. the feature set (of the set or database of the home appliance 100 and/or the server 500) corresponding to the matched standardized feature command.

Thus, based on the comparison of the feature command generated by the personalization module and the one of the standardized feature commands of the home appliance or server, the third feature set is determined. This is referred to as the third operation.

The third feature set is implemented or applied, by the home appliance or the server, to the home appliance. This is referred to as the fourth operation or final operation or implementing operation.

When an embodiment related to the color set of the present invention is applied, in a home appliance that may change its exterior to various colors, the server 500 or the home appliance 100 may first search for a basic theme color in response to a voice or text command input by the user (S21), and at this time, when there is no color that exactly matches the color, a color set (color information) can be secured through a language model, for example, a generative AI (S31). Information that can be included in a color set includes, in addition to RGB color information, information on changes in output brightness. For example, in addition to color changes, a color set can also include changes in brightness.

However, since the language model, that is, the generative AI, do not have the past color outputs of the user, when the language model (generative AI) cannot provide a color value in response to the voice/text command of the user, the server 500 or the home appliance 100 may determine an AI color through a recommendation AI server that reflects past color usage pattern data of the user (S41). The recommendation AI server may be embedded in the home appliance to perform data processing or generate or process data within various environments, such as a cloud server-based system, an on-device system, a distributed server system (multiple servers), etc.

When the embodiment of FIG. 3 is applied, when a voice/text command to change the color theme is recognized in a home appliance having an LED panel and capable of changing the exterior color (e.g., a mood-up refrigerator, a mood-up air conditioner, or the like), even when the color theme included in the input command is not predefined, the generative AI including an LLM such as ChatGPT may be used to generate a color theme that matches the user intent and change the refrigerator color.

In addition, when the generative AI is used, in order to perform a feature set according to the user intent, data (e.g., prompts) input to the generative AI may be generated, or the data may be input to the generative AI to accurately output a feature set according to each situation within a short time or with minimal processing.

In one embodiment, a home appliance, a server device, or the like may input information on the home appliance as additional input data to the generative AI, in addition to the user input command, to generate the result appropriate to the user intent quickly and with minimal calculation. To this end, the information on the home appliance, which may be included in the additional input data, includes information on the feature command. The additional input data may include a display panel layout related to the exterior of the home appliance, the range of colors the panel may generate, the type of home appliance, etc. The information that may be added may vary depending on the type of feature instructed by the feature command. The home appliance or the server device may store additional input data corresponding to the type of each feature, categories of the additional input data, and the like and update the data based on the results of the generative AI.

By coupling a generative AI server or a recommendation AI server with the conventional natural language processing (NLP) server for speech recognition, areas that were previously impossible with only the conventional NLP server, such as identifying the user intent and changing or implementing a feature or feature set such as setting or generating color themes, may be processed.

In Fig. 3, the reference value (threshold) compared to the accuracy may be set in various ways. In this specification, accuracy is compared to the reference value (threshold), such as below or above the reference value. If the accuracy does not meet the reference value, a new feature set is acquired, thereby improving the accuracy of the feature set.

That is, the response to non-predefined color themes or user utterances is possible, thereby satisfying various user utterances and requests related to changing the color of the home appliance, such as a refrigerator, an air conditioner, etc. For example, when the user inputs a command such as "I'm feeling depressed right now, change the color" or "Recommend a color that suits me," the server 500 or the home appliance 100 may generate an optimal color based on the user's command and apply the color to the home appliance, such as a refrigerator, an air conditioner, etc.

The process of FIG. 3 may also be applied to the speech set or the function set like the color set.

When an embodiment related to the speech set of the present invention is applied, in a home appliance that may change its voice guidance message using various voice utterance characters, the server 500 or the home appliance 100 may first search for a basic theme speech in response to a voice or text command input by the user (S21), and at this time, when there is no exactly matched speech, a speech set (speech information) can be secured through the language model, for example, the generative AI (S31).

However, since the language model, that is, the generative AI, do not have the past preferred speech results of the user, when the language model (generative AI) may not provide a specific speech information in response to the voice/text command of the user, the server 500 or the home appliance 100 may determine AI speech information through a recommendation AI that reflects past speech selection pattern of the user (S41).

When the embodiment of FIG. 3 is applied, when the voice/text command to change the speech theme is recognized in the home appliance having an LED panel and capable of changing the speech characteristics of the voice message of the home appliance, even when the speech theme included in the input command is not predefined, the generative AI may be used to generate a speech theme according to the user intent and change the tone, intonation, and the like of the voice guidance message of the home appliance.

By coupling the generative AI server or the recommendation AI server with the conventional NLP server for speech recognition, areas that were previously impossible with only the conventional NLP server, such as identifying the user intent and generating speech themes, may be processed.

That is, the response to non-predefined speech themes or user utterances is possible, thereby satisfying various user utterances and requests related to changing the guidance message of the home appliance, such as a refrigerator, an air conditioner, etc. For example, when the user inputs a command such as "I'm feeling depressed right now, change to the voice message to a cheerful one" or "Recommend a voice message that matches the current music," the server 500 or the home appliance 100 may generate optimal speech information based on the user's command and apply the optimal speech information to the guidance message of the home appliance, such as a refrigerator, an air conditioner, etc.

In the case of a refrigerator as an example, when a functional command such as "There are a lot of new foods in the refrigerator, so refrigerate them well" is input, the server 500 or the home appliance 100 may generate a function set including optimal functional information for the user's command and apply the optimal functional information to the function settings of the home appliance such as a refrigerator, an air-conditioner, etc.

FIG. 4 is a view showing a process in which the server processes the feature command according to one embodiment of the present invention. A server is a single server and may perform functions to be described below. Alternatively, the server is multiple server clusters and may perform functions to be described below. The embodiment of FIG. 4 may be applied to color commands, speech commands, function commands, or the like included in feature commands.

Accordingly, according to one embodiment of the present invention, a single server may include individual modules. According to another embodiment of the present invention, each module to be described below may be a server, and these servers may be included in a single server cluster.

According to still another embodiment of the present invention, two or more modules may constitute a single server.

A preprocessing module 310 (or processing module or processor) of the server or home appliance receives a voice/text command (S21a). In addition, the input command is processed or preprocessed and/or converted into a feature command, and the corresponding first feature set and first accuracy are generated (S21b).

The preprocessing module 310 is, for example, a legacy NLP module, may perform a primary intent analysis on the voice or text command input by the user, and if successful, perform feature control of the home appliance in a conventional manner.

For example, when the input color command is "Change color to a spring theme," the preprocessing module 310 preprocesses the input command to extract a color command "spring theme." In addition, when a color set corresponding to "spring theme" is pre-stored in the preprocessing module 310, the preprocessing module 310 generates the corresponding color set and its accuracy.

When the input command is "Change color to a spring breeze theme," the preprocessing module 310 preprocesses the input command to extract the color command "spring breeze theme." However, unlike the above embodiment, since there is no color set corresponding to "spring breeze theme," the preprocessing module 310 may generate the color set corresponding to the most similar "spring theme" and its accuracy (e.g., 60).

For example, when the input speech command is "Change the voice message to a refreshing voice," the preprocessing module 310 preprocesses the input command to extract the speech command "refreshing theme." In addition, when a speech set corresponding to "refreshing theme" is pre-stored in the preprocessing module 310, the preprocessing module 310 generates the corresponding speech set and its accuracy.

When the input command is "Change the voice message to a refreshing and bright theme," the preprocessing module 310 preprocesses the input command to extract the speech command "refreshing and bright theme." However, unlike the above embodiment, since there is no speech set corresponding to "refreshing and bright theme," the preprocessing module 310 may generate the speech set corresponding to the most similar "refreshing theme" and its accuracy (e.g., 60).

When the accuracy of the feature set generated by the preprocessing module 310 exceeds the reference value, this indicates a successful accuracy, and thus a feature setting module 340 may apply the feature set generated in an operation S21b to home appliances 100a, 100b, and 100c (S51a, S51b, S51c).

On the other hand, when the accuracy of the feature set generated by the preprocessing module 310 is the reference value or less, this indicates a failure in accuracy, and thus the theme module 320 may generate a feature set and accuracy corresponding to the feature command (S31b).

That is, when the analysis of the feature change intent of the user through the NLP module (or the NLP server), which is an example of the preprocessing module 310, fails, the theme module 320, which is an example of the LLM server, processes the feature command (e.g., color command) of the user to perform secondary intent analysis and extract intent analysis and color theme color hex values.

In this case, when the theme module 320 is implemented in a device (e.g., a device provided by an external third party) other than the preprocessing module 310, the server 500 may input a prompt for acquiring information in a manner agreed upon in advance with the theme module 320 to the theme module 320.

In addition, even when the theme module 320 is an external or internal server, information necessary for generating various feature sets (e.g., color set formats, examples of color sets corresponding to color commands, and the like) may be input to the theme module 320.

For example, when the preprocessing module 310 generates a color command as "The weather is too hot today, change the color to cool" to the command "The weather is hot, change the color to cool" but there is no predefined color set corresponding to the cool color, the color command may be input to the LLM, which is an example of the theme module 320, to generate a color set (S31b).

In addition, when a secondary stage of identifying the color change intention of the user is successful based on the accuracy result generated by the LLM, the theme module 320, for example, may extract the color theme hex values for applying the color theme generated by the generative AI, and the feature setting module (e.g., the color setting module) 340 may change panel colors of the home appliances 100a, 100b, and 100c such as a refrigerator and the like (S51a, S51b, S51c). In one embodiment, the intent identification includes generating a color set corresponding to the color command of the user. In the present specification, the intent identification of the user input feature command includes a process of generating a feature set corresponding to the feature command.

During this process, when the theme module 320 is an external server, an LG ThinQ server may include the feature setting module 340 that may set the feature set (e.g., a color set) generated by the theme module 320 in the home appliance.

Meanwhile, when the accuracy of the feature set (e.g., the color set) generated by the theme module 320 is the reference value or less (S41a), this indicates a failure in accuracy, and thus a personalization module 330 may generate a feature set corresponding to the feature command (S41b).

When the theme module 320, for example, fails to analyze the feature change intent of the user through the generative AI or the LLM (i.e., fails to identify the secondary feature intent), the personalization module 330, for example, a recommendation AI server, may recommend the feature. During this process, the theme module 320 may determine whether the user intends to make a recommendation and may also generate whether the user wants a feature recommendation from the recommendation AI server as an accuracy result.

For example, when the input color command is "Recommend a color theme that suits me today," the accuracy of the color set generated in the operations S21b/S31b may be the reference value or less, resulting in a failure. Alternatively, the theme module 320 may respond that the LLM cannot generate the color set. In this case, the personalization module 330 may use history information on the previous color settings of the user for the home appliance.

The personalization module 330 extracts a color theme generated to be preferred by the user based on the color usage patterns of the user on the home appliances and transmits the color themes to the color setting module (an embodiment of feature setting module 340) (e.g., the LG ThinQ server) to change the color theme of the product.

When the embodiment of FIG. 4 is applied, the preprocessing module 310 may perform different preprocessing depending on whether the command includes the type or name of the home appliance. In one embodiment of the invention, when the command includes the type or name of the home appliance, the preprocessing module 310 preprocesses the command based on the corresponding device. In another embodiment of the invention, when the command includes the names or types of a plurality of home appliances, the preprocessing module 310 may preprocess the command based on the specific home appliance that has recognized the command utterance of the user. In still another embodiment of the invention, when the name or type of the specific home appliance is not included, the preprocessing module 310 may preprocess the command based on the specific home appliance that has recognized the command utterance of the user or preprocess the command by specifying the home appliance corresponding to the command.

In addition, when results generated from the theme module 320, which uses an LLM as an example, are processed, feature settings may be performed differently depending on whether the result includes the type or name of the home appliance.

In one embodiment of the invention, when the command includes the type or name of the home appliance, the theme module 320 generates the result based on the corresponding device. In another embodiment of the invention, when the command includes the names or types of a plurality of home appliances, the theme module 320 may generate the result based on the specific home appliance that has recognized the command utterance of the user In still another embodiment of the invention, when the name or type of the specific home appliance is not included, the theme module 320 may generate the result based on the specific home appliance that has recognized the command utterance of the user or generates the result by specifying the home appliance using the command.

The above description may also be applied to various feature sets, such as a speech set, a function set, etc.

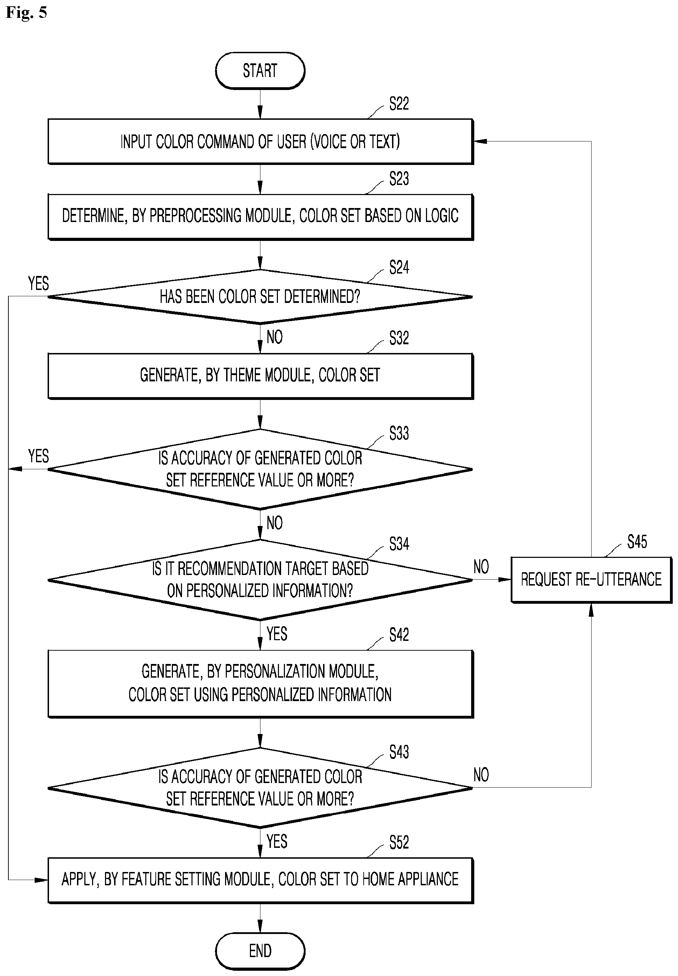

FIG. 5 is a view showing a process of processing a color command according to one embodiment of the present invention.

The user inputs a color command via voice or text (S22). The preprocessing module 310 verifies a color set based on logic (S23). That is, the preprocessing module 310 extracts keywords from the color command (utterance or text command) input by the user. In addition, the preprocessing module 310 generates the color set corresponding to the intent of the color command input by the user based on the logic that compares the extracted keywords with names, keywords, and the like of pre-stored color sets. This includes a process in which the preprocessing module 310 identifies the intent of the color command and generates an appropriate color set.

When the color set is determined in an operation S23 (when the user intent to change the color is identified) (Yes in an operation S24), the feature setting module 340 applies the determined color set to the home appliance (S52).

When the color set is not determined in the operation S23 (when the user intent to change the color is not identified) (No in the operation S24), the theme module 320 generates a color set (S32). For example, the server 500 or the home appliance 100 uses an LLM (GPT) or the like to identify the color intent from the color command input by the user (S32). In one embodiment, the server 500 or the home appliance 100 may include a theme module 320, and this theme module 320 may be configured as software or hardware. A control unit, processor, CPU, etc., which controls the server 500 or the home appliance 100, may load the theme module 320 configured as software into memory and execute it, or input predetermined information into a hardware chip which implements the theme module 320 and obtain a result. The server 500 or the home appliance 100 determines whether the accuracy of the generated color set is the reference value or more (S33). For example, the server 500 or the home appliance 100 determines whether the color set generated in an operation S32 is appropriate for the color intent of the color command input by the user. As the determination result, when the accuracy is the reference value or more, an operation S52 is performed.

Meanwhile, when the accuracy is low in an operation S33, the server 500 or the home appliance 100 determines whether the input color command is a recommendation target based on personalized information (S34). For example, when the input color command is "Make it my favorite color," it may be determined that the color command is a request for a color based on the personalized information.

On the other hand, when the input color command is "Oh, color of the refrigerator is weird, isn'it?" it is difficult to determine whether the color command is a request for a color change based on the personalized information.

This determination is made, in one embodiment, by the theme module 320 determining, during the color set generating process for the color command, that the color command is unlikely to be a color change.

When it is determined that the color command is a recommendation target based on the personalized information in an operation S34, the personalization module 330 generates a color set using the personalized information (S42). In addition, the server 500 or the home appliance 100 determines whether the accuracy of the generated color set is the reference value or more (S43). For example, the server 500 or the home appliance 100 determines whether the color set generated in an operation S42 is appropriate for the color intent of the color command input by the user. As the determination result, when the accuracy is the reference value or more, an operation S52 is performed.

When the accuracy is not the reference value or more even in an operation S43 (No in the operation S43), the home appliance 100 requests re-utterance (S45). For example, the home appliance 100 may request re-input by newly uttering a command, such as "Please say again to change the color."

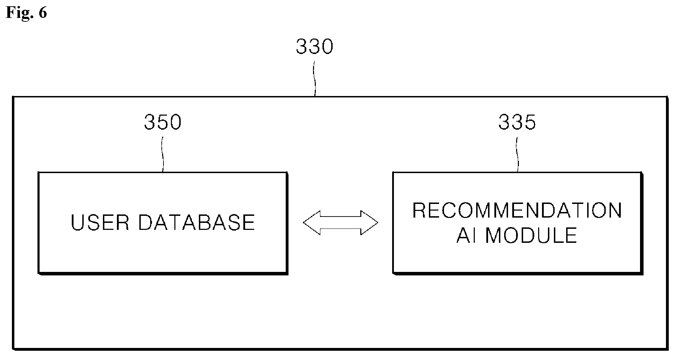

FIG. 6 is a view showing a configuration of a personalization module according to one embodiment of the present invention.

The personalization module 330 may include a user database (DB) 350 that stores color information set by the user, and a recommendation AI module 335. The personalization module 330 may extract a specific color set from the user database based on the past usage patterns of the user for the color command. When the personalization module 330 is disposed in the server 500, the recommendation AI module 335 may be implemented as the recommendation AI server. Meanwhile, when the personalization module 330 is disposed in the home appliance 100, the recommendation AI module 335 may be configured as a software component or hardware component within the home appliance 100.

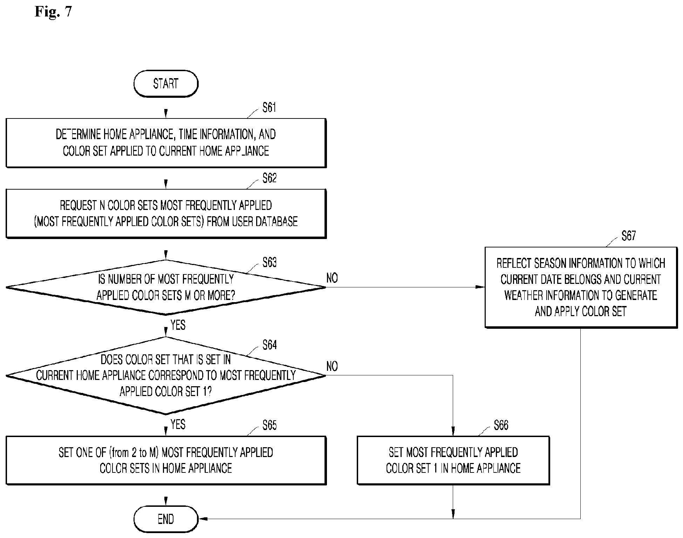

FIG. 7 is a view showing a process in which the personalization module uses personalization information to make recommendations according to one embodiment of the present invention. The operation S42 will be described in more detail.

The personalization module 330 determines the home appliance, time information, and the color set currently applied to the home appliance (S61). In addition, the personalization module 330 requests n color sets most frequently applied (most frequently applied color sets) for the corresponding home appliance or other home appliances used by the user from the user database 350 (S62). "n" may be 2 or more.

When the number of most frequently applied color sets extracted as a result of the request is not m (No in an operation S63), the number of most frequently applied color sets is insufficient, and thus the personalization module 330 reflects season information of a current date or current weather information to generates a color set and applies the color set to the home appliance (S67). For example, "m" may be 2 in one embodiment.

When there are m or more most frequently applied color sets (Yes in the operation S63), the number of most frequently applied color sets secured by the personalization module 330 is sufficient, and thus each most frequently applied color set is compared with the color set currently set in the home appliance. For example, the personalization module 330 determines whether Most frequently applied color set 1 is the same as the color set currently set in the home appliance. In addition, when Most frequently applied color set 1 and the color set currently set in the home appliance are the same (Yes in an operation S64), the personalization module 330 sets one of the m most frequently applied color sets, excluding Most frequently applied color set 1, in the home appliance (S65). When Most frequently applied color set 1 and the color set currently set in the home appliance are not the same (No in the operation S64), the personalization module 330 sets Most frequently applied color set 1 in the home appliance (S66).

In the above embodiment, n or m may be set in various ways.

The embodiment of FIG. 7 may be applied to a process of recommending a feature set based on a usage pattern of a user. FIG. 7 shows an example in which the personalization module 330 extracts the top two most frequently applied values from a list of the color sets (color theme hex values) applied until now among the color sets and applies a theme different from the currently applied color set.

When it is difficult to extract two most frequently applied values due to an insufficient user database, color themes may be recommended based on the current date, time, weather, and the like and applied to the home appliance.

Next, the process of generating a feature set using the theme module 320 will be described.

When a user uses a predefined name for a product as a feature command to use a specific feature of the device, the preprocessing module 310 included in the server 500 or the home appliance 100 may provide a feature set corresponding to the corresponding feature.

Meanwhile, when the user utters a feature command that is commonly used in the society to which the user belongs during the process of uttering the feature command, the theme module 320 may generate a feature set using a language model.

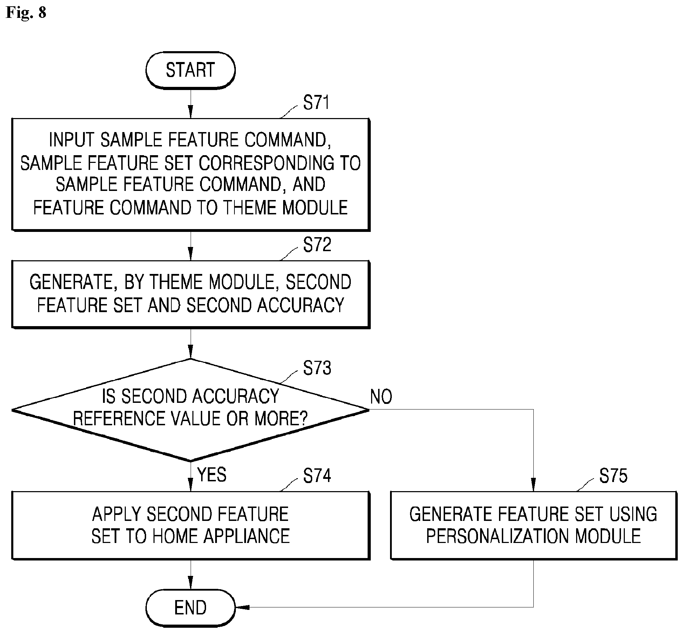

FIG. 8 is a view showing a process of generating a feature set based on the theme module 320 according to one embodiment of the present invention.

The server 500 or the home appliance 100 extracts feature commands and feature sets that may be input to the theme module 320 from an internal storage. These are referred to as sample feature commands and sample feature sets. In addition, the server 500 or the home appliance 100 inputs the sample feature commands, sample feature sets, and feature commands to the theme module 320 (S71).

Consequently, the theme module 320 generates the second feature set and the second accuracy (S72). When the second accuracy is the reference value or more (S73), the server 500 or the home appliance 100 may apply the second feature set to the home appliance 100 (S74). On the other hand, when the second accuracy does not meet the reference value or more, the server 500 or the home appliance 100 generates a feature set using the personalization module 330.

The sample feature command is an example of commands that the user may utter. The sample feature set is a feature set corresponding to the sample feature command.

For example, the sample color command and a corresponding sample feature command are as follows.

**[Table 4]**

| Sample feature command | Sample feature set |
|---|---|
| Make it Iron Man color | {"#FF0000," "#FF0700," "#FF8C00," "#C0C0C0"} |
| Make it autumn color | {"#FF7F50," "#FFA500," "#FFB700," "#800000"} |
| .. | .. |
| Make it giraffe color | {"FFD700," "#8B4513," "#060400," "#FFA500"} |

When the sample color command and the sample feature set are input to the theme module 320 and the color command is input, the theme module 320 may apply a relationship between the sample feature command and the sample feature set to generate a color set (second color set) corresponding to the color command.

In one embodiment, when the theme module 320 is configured based on a language model such as ChatGPT, the server 500 or the home appliance 100 may input a prompt to the theme module 320. In one embodiment, the server 500 or the home appliance 100 may include the sample color commands and the sample feature sets in a few shot.

The prompt input to the theme module may include instructions, sample feature commands, etc. In one embodiment, the prompt may include instructions to be input to the theme module 320 and a message provided by the server 500 or the home appliance 100 to the theme module 340.

In addition, the message may include the sample feature command (sample color command) and the corresponding sample feature set (sample color set) as shown in Table 4. Accordingly, the theme module 320 may generate a color set corresponding to a color command (user_request) uttered by the user.

In order to enable the theme module 320 to generate more accurate results, the server 500 or the home appliance 100 may additionally input information on the region, country, or the like to which the user uttering the feature command belongs to the theme module 320. For example, the color of an apple perceived by a Korean may differ from the color perceived by an American. Accordingly, the server 500 or the home appliance 100 inputs information on the region or country where the feature command has been uttered to the theme module 320, thereby enabling the accurate generation of a feature set, such as colors, sounds, functions, or the like commonly used by people belonging to a specific region or country.

In one embodiment, when the theme module 320 is a GPT, the home appliance 100 or the server 500 may instruct a GPT to extract four theme colors in hexadecimal format using a GPT prompt.

In addition, when it is determined that the color command uttered by the user wants a recommendation, the theme module 320 is instructed to return a "True" value (a region instructed to return whether a recommendation is desired). The home appliance 100 or the server 500 may also add color therapy content to prompt instructions so as to generate a color theme according to a situation. The home appliance 100 or the server 500 may present a few examples (sample color commands and sample color sets) in a few shot and include the examples in the prompt to output a list of recommended flags or RGB color hexadecimal values that the home appliance 100 may set.

When applied to a three-door kimchi refrigerator, the home appliance 100 or the server 50 may change the number of extracted color hexadecimal values from four to three.

In addition, when applied to other types of home appliances, such as an air conditioner, an oven, and the like, the color hexadecimal values output based on the number of panels on the door, side surfaces, and the like of the home appliance may be changed and set.

Meanwhile, the personalization module may use personalized information to generate a feature set corresponding to the feature command.

The personalization module 330 included in the server 500 or the home appliance 100 acquires device information of the home appliance to which the feature command has been input. In addition, the personalization module 330 may extract personalized information corresponding to the device information, and in one embodiment, the personalized information may generate a third color set using information on one or more of a color set previously set in the device corresponding to the device information, the frequency of setting these color sets, or maintenance times of these color sets. In another embodiment, the personalized information may include information about one or more of a function set previously set for a home appliance corresponding to the device information, the frequency of the function set set, or the duration of the function set.

To this end, the database may store identification information on the color set, time information, and device-specific identification information. In addition, the database may store information on the most recently applied color set.

The database stores color sets that have been set for each device. Accordingly, when the theme module 320 determines that the feature command is a user pattern-based recommendation, the personalization module 330 may perform calculations to recommend feature sets for each device. Consequently, different feature sets may be generated for each home appliance.

For example, when device_id is 1, after most frequently applied values for the color sets applied to device_id may be sorted, the color of the home appliance may be set as the next color different from the currently set color.

### [Color 1, Color 2, Color 3, Color 4]

When device_id is 2, after the most frequently applied values for the color sets applied to device_id, the color of the home appliance may be set as the next color different from the currently set color.

### [Color 13, Color 14, Color 15, Color 16]

For example, in the information stored in the database, when device_id is 1, "Iron Man" was applied twice, and the color set "Korea" is currently applied. Accordingly, when the user utterance command requests "Recommendation," the personalization module 330 provides the color corresponding to "Iron Man" as a recommended color set.

Likewise, when device_id is 2, "Autumn Color" was applied twice, and "Autumn Color" is also applied for recommendation.

Meanwhile, the server 500 or the home appliance 100 may store the feature set generated by the theme module 320 as personalized information.

For example, when the feature set (e.g., Iron Man color) generated by the theme module 320 is repeatedly set in a device whose device_id is 1 or the maintenance time after setting is long, the server 500 or the home appliance 100 stores the feature command (Iron Man) and color information ([Color 1, Color 2, Color 3, Color 4]) in the database.

Then, when the user inputs a new command, the server 500 or the home appliance 100 loads and applies the information stored in the database.

For example, when the preprocessing module 310 processes the color command "Make it Iron Man color," the "Iron Man" color and color information ([Color 1, Color 2, Color3, Color 4]) stored in the database after keyword extraction may be generated as the first color set.

Alternatively, when the personalization module 330 processes the color command "Make it Iron Man color," the "Iron Man" color and color information ([Color 1, Color 2, Color3, Color 4]) stored in the database after keyword extraction may be generated as the third color set.

During this process, the server 500 or the home appliance 100 may not input a separate feature command to the theme module 320. That is, it is assumed that the second feature set generated in the operation S31 is applied to the home appliance 100 and maintained for a long time during the processes of performing the operations S21 to S51 of FIG. 3 once.

When the user utters the same feature command, the preprocessing module 310 of the home appliance 100 or the server 500 may process the feature command, or the operation S31 is omitted, and the personalization module 330 may load the stored feature set from the database in an operation S41.

That is, when the user utters the Iron Man color once and applies the Iron Man color to the home appliance 100 and the maintenance time or the number of times set repeatedly is a reference value, the server 500 or the home appliance 100 may store the corresponding feature command and feature set in the database to increase a processing speed of the utterance command of the user.

This is summarized as follows. The server 500 or the home appliance 100 stores the feature command and the second feature set in the database according to the maintenance time or the number of applications of the second feature set calculated by the theme module 320.

After performing the operations S21 to S51 of FIG. 3, the server 500 or the home appliance 100 may use the information stored in the database during the process in which the preprocessing module 310 generates the first feature set or the personalization module 330 generates the third feature set for the input feature command.

More specifically, the preprocessing module 310 may acquire information stored in the database to generate the feature set. Alternatively, the personalization module 330 may acquire the information stored in the database to generate the feature set.

Hereinafter, a device implementing the embodiments of the present invention will be described.

The embodiments of the present invention may be implemented in various devices. The device includes various types of a server, a home appliance, an electronic device, a computing devices, etc. In addition, the device of the present invention may include hardware or software components that perform the embodiments of the present invention in addition to physical devices. In addition, the embodiments of the present invention include programs, hardware, chips, and the like stored in a form capable of executing predetermined tasks or implemented in a form capable of executing the task.

Programs, software, and the like may be fixedly stored within the device or may be temporarily transmitted from an external source, stored in the device, and then executed. In the case of the fixed storage method, the device may include a non-transitory computer readable medium.

That is, the embodiments of the present invention may be implemented as one or more computer programs or computer-readable storage media in a combination of one or more of the above ones.

The functions of the elements disclosed herein may be implemented using circuits or processing circuits including general-purpose processors, special-purpose processors, integrated circuits, application-specific integrated circuits (ASIC), existing circuits, and/or a combination thereof. The circuits may be processors configured or programmed to perform the disclosed functions. The processor may include transistors and other circuits and thus may be considered a processing circuit or circuit.

The circuits, units, or means herein may be hardware that performs or is programmed to perform the functions described in the detailed description. The hardware may be the hardware disclosed herein or other known hardware and may be hardware that is programmed or configured to perform the functions described in the detailed description. When the hardware is a processor, which may be considered a type of circuit, the circuits, means, or units may be a combination of hardware and software and may be software used to configure the hardware and/or the processor. In addition, the computer storage medium may be a non-transitory computer readable medium. For example, the computer storage medium may be executable by a cloud server-based system. The computer storage medium may be disposed within a single device or distributed across two or more different devices. Accordingly, a single logical computer storage medium may physically include two or more computer storage media, and positions at which these media are disposed may also be one or more positions. The computer storage medium includes various storage media such as a hard disk, a CD/DVD disk, a memory card, a memory chip, etc.

In addition, the data described herein may be calculated or performed in various environments, such as a cloud server-based system, an on-device system, a distributed server system (multiple servers), etc. The data may be processed in a distributed manner in a cloud server or executed locally on an on-device processor, and the results of the processing in each environment may be stored in non-volatile memory.

Electronic devices, such as home appliances, and server computing devices may be connected to one or more storage devices via a network. The storage device may be a combination of volatile and non-volatile memories and may or may not be disposed at the same physical position as the computing device.

The server computing device may include one or more processors and a memory. In this case, the memory may store information accessible to the processor and include data that may be processed, stored, or modified by processor-executable commands. In addition, the memory may include volatile and non-volatile memories. The processor may include a central processing unit (CPU), a graphics processing unit (GPU), a field programmable gate array (FPGA), an ASIC, or a tensor processing unit (TPU).

Instructions may be configured to perform specific operations when the processor executes an instructed task and stored in object code or an interpretable script format. These commands may be used to implement the system and executed on a local or remote processor. Data may be retrieved, stored, or modified based on the commands and configured in a database, JSON, YAML, or XML format.

These commands may include executable files, source code files, metadata, etc.

Electronic devices including home appliances and hubs may be configured similar to a server computing device. The electronic devices including home appliances and hubs may include a processor, a memory, commands, data, and user input and output devices. The server computing device may transmit data to the electronic device, and the electronic device may display a portion of the received data through a display. In addition, data transmission and communication between the server computing device and the electronic device is possible via networks such as Bluetooth, Wi-Fi, wired and wireless networks, or the like, and direct and indirect communication between computing devices is possible, thereby supporting various protocols and connection methods.

In addition, the functions of the server computing device of the present invention may be performed by a smartphone, a tablet, etc.

The methods or processes in the embodiments of the present specification sequentially perform one or more tasks, and each task may be performed by either hardware or software or collaboration between the two. For example, hardware may perform a first task, and software may perform a second task. Of course, hardware may perform the entire task, or software may perform the entire task.

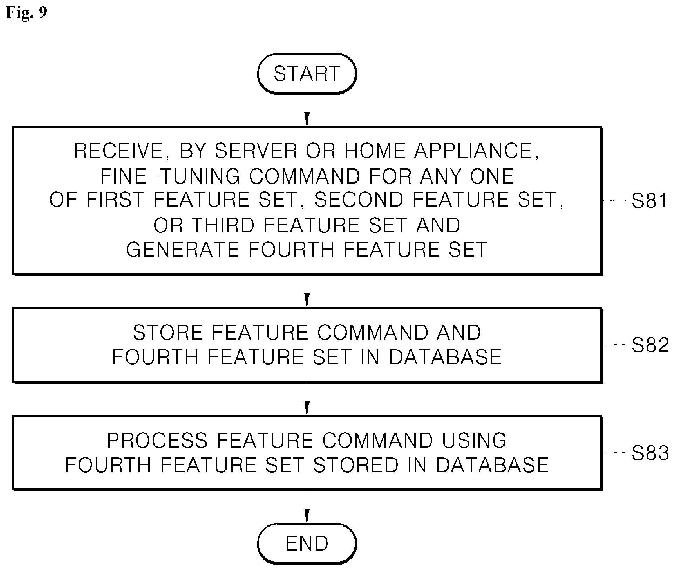

FIG. 9 is a view showing a processing process when fine-tuning a feature set occurs according to one embodiment of the present invention.

The server 500 or the home appliance 100 receives a fine-tuning command for one of the first feature set generated by the preprocessing module 310, the second feature set generated by the theme module 320, or the third feature set generated by the personalization module 330 and generates a fourth feature set (S81).

In this case, the server 500 or the home appliance 100 stores the feature command and the fourth feature set in the database (S82). In addition, the server 500 or the home appliance 100 processes the feature command using the fourth feature set stored in the database for the subsequently input feature command (S83).

For example, after performing the operations S21 to S41 of FIG. 3, the server 500 or the home appliance 100 loads the fourth feature set stored in the database and sets the fourth feature set as the feature set of the home appliance during the process in which the preprocessing module 310 or the personalization module 330 generates a feature set for the input feature command.

When the above embodiments are applied, when the user wants to change the features (e.g., color, voice message, function) of the home appliance such as a refrigerator, an air conditioner, or the like, one of the feature set (e.g., a basic theme) provided by the home appliance by default in response to the text or voice command of the user, the feature set provided by the theme module such as a generative AI, and the feature set provided by the personalization module having a recommendation AI may be applied.

In addition, when the same voice/text commands for features (e.g., color values) generated by the theme module 320, such as a generative AI, accumulate, the voice/text commands may be stored in the database as the personalized feature set, thereby increasing efficiency during the process of modifying a feature.

The personalization module 330 may be implemented within the home appliance or the server 500, such as a cloud server. The theme module 320, which uses generative AI in one embodiment, may use an external generative AI server or may be implemented within the home appliance 100 or its own server 500.

Each module shown in FIG. 4 may be implemented in one of the home appliance 100 or the server 500. In addition, the theme module 320 may be disposed in a separate generative AI external server distinguished from the server 500.

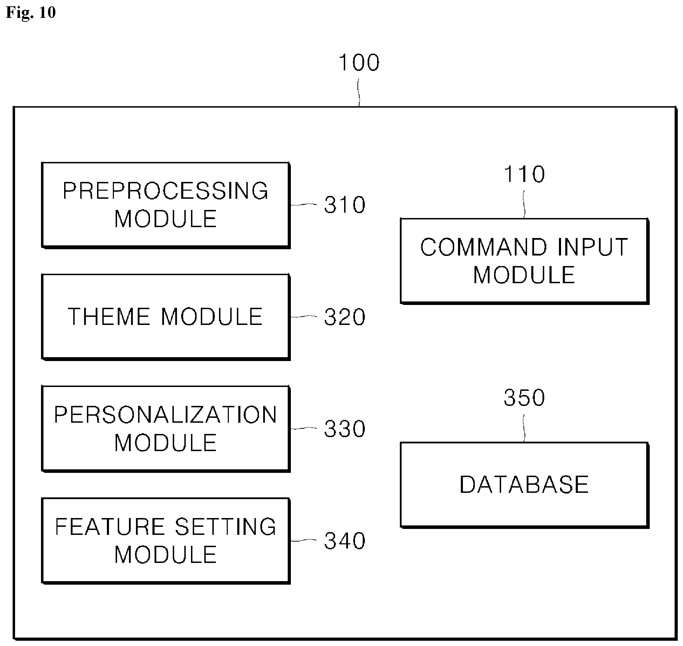

FIG. 10 is a view showing a configuration including all components within the home appliance according to one embodiment of the present invention.

The home appliance 100, which is one embodiment of the device, includes the preprocessing module 310, the theme module 320, the personalization module 330, and the feature setting module 340. A command input module 110 is a module that receives feature commands, such as voice, text, etc. The preprocessing module 310, the theme module 320, the personalization module 330, the feature setting module 340, and the database 350 are described above. The database 350 may store the personalized information of the device.

The feature setting module 340 sets one of the first, second, or third feature sets generated by the preprocessing module 310, the theme module 320, and the personalization module 330, respectively, as a feature.

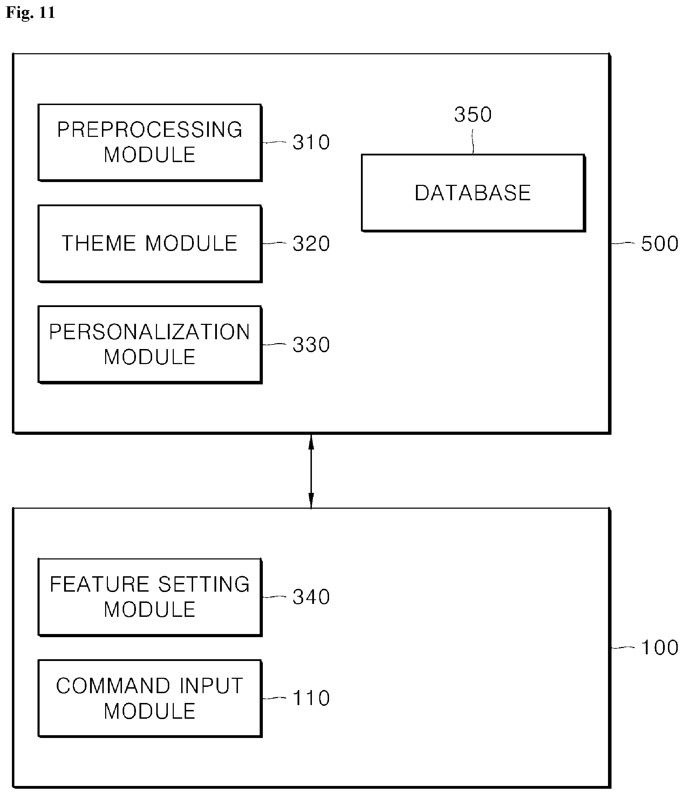

FIG. 11 is a view showing a server including a preprocessing module, a theme module, a personalization module, and a database according to another embodiment of the present invention. The server 500 and the home appliance 100 may include a communication module (not shown) to transmit and receive predetermined information.

The server of FIG. 11 provides a personalized service using the generative AI. Regarding the detailed components of the server 500, the preprocessing module 310 receives the feature command received by the home appliance and calculates the first feature set and the first accuracy corresponding to the feature command.

When the first accuracy is the reference value or less, the theme module 320 calculates the second feature set and the second accuracy corresponding to the feature command. When the second accuracy is the reference level or less, the personalization module 330 calculates the third feature set using the personalized information corresponding to the device information of the home appliance and the feature command.

When the server 500 transmits one of the first to third feature sets generated in this way to the home appliance 100, the home appliance 100 sets one of the feature sets as a feature of the home appliance. To this end, the feature setting module 340 may set the received feature set as a specific region or function of the home appliance 100.

When the feature set is a color set, the feature command corresponds to a color command. For example, when a preprocessing color command includes the color names of the colors constituting the first color set, the server 500, for example, the preprocessing module 310, may determine that the first accuracy for the first color set corresponds to the reference value. This is a case in which a specific color name, such as orange or blue, is included in the color command. When a feature set is a function set, the feature command corresponds to a function command. For example, a preprocessing function command includes the function names of the functions constituting the first function set, the server 500, for example, a preprocessing module 310, may determine that the first accuracy for the first function set corresponds to the reference value. This is a case in which a specific function name, such as setting the refrigerator temperature or turning the air conditioner on/off, is included in the function command. The above embodiment can be applied to a server 500 or a home appliance 100 including a preprocessing module 310.

In addition, the server 500 inputs a sample feature command and a sample feature set corresponding to the sample feature command to the theme module 320 in order to acquire a feature set using the theme module 320. In addition, the server 500 determines the second feature set and second accuracy generated by the theme module 320 and determines whether to input the feature command to the personalization module 330 based on the second feature set and the second accuracy.

When the user inputs a command such as "Recommend," the theme module 320 may set the second accuracy very low.

As described above, the personalization module 330 of the server 500 may generate a color set using information on one or more of the color set previously set in the home appliance corresponding to the device information, the frequency of the set color set, or the maintenance time of the set color set.

In addition, in order to increase the accuracy of the result generated by the theme module 320, the server 500 may additionally input information on the region or country to which the user uttering the feature command belongs to the theme module 320. In addition, the age, gender, and occupation information of the user may also be additionally input to the theme module 320, thereby increasing the accuracy of the feature set generated in response to the feature command of the user.

The server 500 may transmit one of the generated feature sets to the home appliance 100, and the home appliance 100 may apply the transmitted feature set to the home appliance 100.

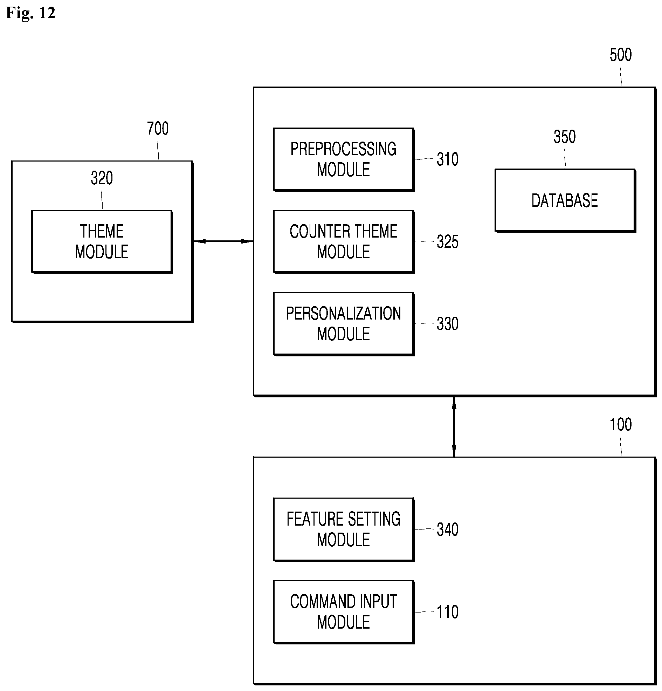

FIG. 12 is a view showing a server including a preprocessing module, a personalization module, and a database according to still another embodiment of the present invention. The server 500 and the home appliance 100 may include a communication module (not shown) to transmit and receive predetermined information.

In addition, the theme module 320 is disposed in a separate generative AI external server 700 distinguished from the server 500. In this case, unlike FIG. 11, the server 500 includes a counter theme module 325. The descriptions of other components will be made with reference to FIG. 11.

When the first accuracy generated by the preprocessing module 310 is the reference level or less, the counter theme module 325 transmits the feature command to the theme module 320 of the generative AI external server 700 and receives the second feature set and the second accuracy from the theme module 320.

In order to increase the accuracy of the result of the theme module 320, the counter theme module 325 transmits the sample feature command and the sample feature set corresponding to the sample feature command to the theme module 320. In addition, the counter theme module 325 receives the second feature set and the second accuracy corresponding to the feature command from the theme module 320.

The above embodiment may be implemented in a voice-recognizable device (e.g., an AI speaker, a hub, or the like) in addition to a remote controller or a main body of the home appliance 100 for voice recognition and intent identification. For example, the home appliance such as a refrigerator, an air conditioner, or the like may include only the feature setting module 340, and the home appliance such as an AI speaker, a hub, or the like may include the command input module 110.

In addition, the home appliance such as an AI speaker, a hub, or the like may include the preprocessing module 310, the theme module 320, and the personalization module 330. In this case, the home appliance such as an AI speaker or a hub may transmit a device control signal to a related home appliance (or a device to be controlled).

As in the embodiment of FIG. 12, when the theme module 320, such as an LLM (GPT), is disposed on the external AI server 700, the theme module 320 cannot access a user database of a customer due to privacy or security issues. Accordingly, the embodiment of FIG. 12 may be implemented by separating the generative AI, the server (theme module), and the recommendation AI server (personalization module).

The theme module 320 and the personalization module 330 may generate a feature set for a feature command using the generative AI function (theme module) that reflects the linguistic characteristics of the user's society and a recommendation AI function (personalization module) based on personalized information. In addition, by applying the preprocessing module 310 and the personalization module 330, problems, such as increased costs or network latency during the use of the theme module 320 disposed in the external AI server 700, can also be resolved.

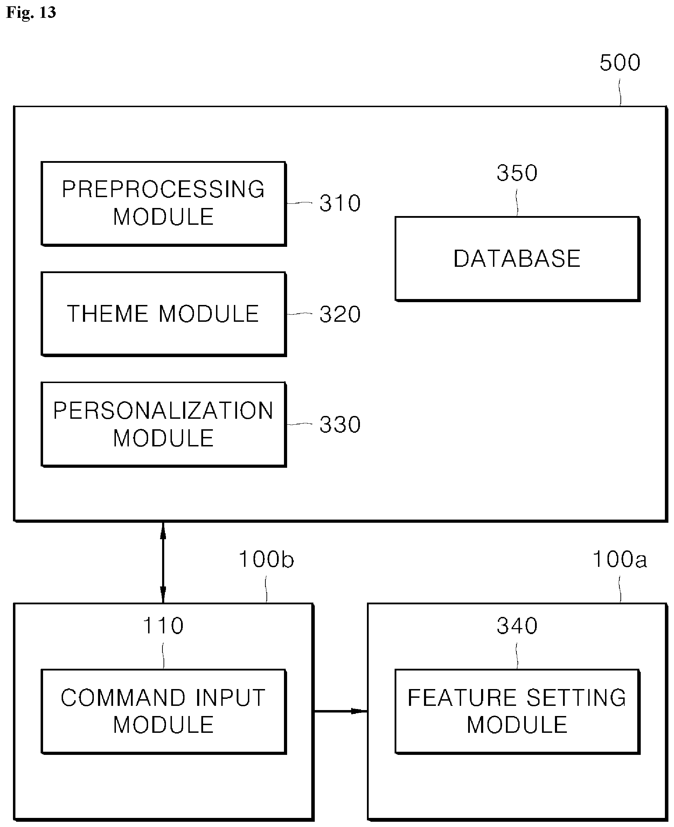

FIG. 13 is a view showing a configuration of a home appliance, a home appliance for voice processing, and a server according to one embodiment of the present invention.

The AI speaker, the hub, or the like is a home appliance 100b for voice processing and includes a command input module 110. In this case, the home appliance 100b for voice processing may communicate with the server 500, receive the feature set, and provides the feature set to a home appliance 100a, such as a refrigerator, an air conditioner, an oven, or the like, thereby controlling the feature settings of the home appliance 100a.

Alternatively, when combining the embodiments of FIGS. 10 and 13, the home appliance 100b for voice processing may include the preprocessing module 310, the theme module 320, the personalization module 330, and the command input module 110. In addition, the home appliance 100a, such as a refrigerator, an air conditioner, an oven, or the like, may include the feature setting module 340.

The present invention is not limited to a specific home appliance and may be applied to all home appliances that include the feature setting module 340 that sets the color, the type of voice message, and a function as described above.

In the embodiments of FIGS. 11 and 13, the preprocessing module 310, the theme module 320, and the personalization module 330 may constitute a single processor.

In the embodiment of FIG. 12, the preprocessing module 310, the counter theme module 325, and the personalization module 330 may constitute a single processor.

Based on the embodiments of FIGS. 11 to 13, the processor of the server may process information received from the home appliance and input the processed information to the theme module 320, which is the generative AI model, to acquire a result. The processor may receive a feature command instructing a feature change of the first home appliance from the first or second home appliance.

In addition, the processor may generate a prompt including at least one of configuration information of the first home appliance, the state information of the first home appliance, and the feature command in response to the feature command.

The processor may input the generated prompt to the theme module 320 to acquire a result and convert the acquired result into the first feature set to be set in the first home appliance.

Here, the second home appliance may be a user terminal or a home appliance other than the first home appliance. For example, a smart hub, a smart AI speaker, or the like may be the second home appliance, and in this case, the voice/text command of the user for converting the feature set of the first home appliance (e.g., a refrigerator or an air conditioner) may be transmitted to the server 500 through the second home appliance.

The user's command may be input via voice or text, and the device receiving the command and transmitting the command to the server may be the first home appliance instructed to change the feature set or a separate second home appliance (e.g., a user terminal, an AI speaker, or the like).

As described above, the feature command is a command instructing a color change of the first home appliance in one embodiment.

The feature set includes information on one or more colors to be set in the first home appliance.

The configuration information is information on a region of the first home appliance to which one or more colors will be set. For example, information on a specific color being set in a refrigerator compartment door corresponds to the configuration information.

The state information includes information on the second feature set currently or previously set in the first home appliance.

The result acquired from the theme module 320 may include two or more candidate feature sets.

The processor may apply one or more of the configuration information, the state information, and the feature command to convert one of two or more candidate feature sets into the first feature set.

In addition, the processor may transmit the first feature set to the first home appliance or transmit the feature control command to apply the first feature set to the first home appliance to the first home appliance. The processor may transmit the first feature set to the first home appliance through the second home appliance.

To this end, the processor may store software or program code capable of performing the above tasks. After such software or program code is received from another external device and stored in a storage medium used by the processor, the processor may execute the software or program code.

In addition, the processor may include a hardware component, such as a programmable chip, and the processor may store data, program code, and the like, which will be input to the hardware component, in a predetermined storage medium and input the data, the program code, and the like to the hardware component.

The hardware or software may be the processor itself. Alternatively, the hardware or software may be linked with the processor to implement embodiments of the present invention.

In the embodiments of FIGS. 11 to 13, the server 500 or the home appliance 100 may include modules in various combinations. These modules may be implemented in hardware or software, and to this end, each module may be implemented in one storage medium or a plurality of storage mediums. In addition, the storage medium may be implemented separately in the server 500 and the home appliance 100.

Accordingly, the storage medium installed in the server 500 or the home appliance 100 may include the preprocessing module 310 and the personalization module 330. In addition, the storage medium may include one of the theme module 320 or the counter theme module 325.

The preprocessing module 310 generates the first feature set and the first accuracy corresponding to the feature command.

When the first accuracy is the reference value or less, the theme module 320 may generate the second feature set and the second accuracy corresponding to the feature command.

When the first accuracy is the reference value or less, the counter theme module 325 may transmit the feature command to the theme module 320 of the generative AI external server 700 and receive the second feature set and the second accuracy from the theme module 320.

When the second accuracy is the reference value or less, the personalization module 330 may generate the third feature set using the personalized information and the feature command corresponding to the device information of the home appliance.

In addition, the storage medium may control the home appliance to set the features of the home appliance. The storage medium may provide the feature setting module 340 of the home appliance 100 with information necessary for feature settings.

Accordingly, FIGS. 11 to 13 include embodiments of the configuration of a computer-readable and executable storage medium. FIGS. 11 to 13 include embodiments of the configuration of hardware or software implemented in the server 500 or the home appliance 100.

When applying the embodiments of FIGS. 11 to 13, existing, older home appliances (e.g., 100a) without an AI function may also be connected to a service (e.g., ThinQ On) that provides a feature set through the server 500 that performs voice processing and generates a feature set or the home appliance 100b for voice processing.

Consequently, the feature set may be provided to allow the generative AI to understand the context of the user's commands and operate smoothly, and the home appliance 100a may be upgraded to an AI appliance. Consequently, the user may combine ThinQ On with IoT devices to implement a reasonable AI home with existing home appliances, eliminating the need to purchase all new AI appliances.

For example, it is assumed that a customer connects an existing air conditioner without an AI function and an occupancy sensor that detects a space to ThinQ On that provides a feature set. Since ThinQ On generates the feature set in response to the feature command, the user's position may be identified in real time, and the airflow and direction of the air conditioner may be adjusted to deliver optimal airflow for a customer. The existing air conditioners may be upgraded to powerful AI air conditioners by being combined with LG ThinQ On without purchasing a new, expensive, state-of-the-art AI air conditioner.

The server 500 according to the embodiment of the present invention may provide an AI service and include the database 350 that stores past personalized or routine information on the customer.

By using an LLM such as ChatGPT and a server including user experience data, such as usage patterns of an electronic device of the user, an optimized space solution can be provided to each individual based on learning about the user's lifestyle. For example, when the user uses a feature command such as "I studied well last week, so please set it the same way," the settings stored in the database 350 may be loaded to establish a personalized environment.

In one embodiment of the present invention, the server 500 includes a server cluster, which is a collection of various servers in an embodiment. Accordingly, the configuration of the server 500 can be easily changed by those skilled in the art.

In one embodiment, the server 500 in the embodiments of FIGS. 11 to 13 may provide the function of an NLP server. For example, the server 500 may include the preprocessing module 310, the counter theme module 325 or the theme module 320, etc. In addition, the server 500 may perform a task to input a predetermined prompt message to the theme module 320. That is, in order to acquire accurate answers through the LLM model such as ChatGPT, the server 500 may structure the prompt content and embed and store an utterance DB.

As show in FIG. 12, when the theme module 320 is implemented in the external AI server 700, the server 500 can efficiently generate prompt tokens, thereby securing maximum performance for the theme module 320 using GPT as an example at low cost, with low network latency, etc. The NLP server may be implemented inside the server 500 or as a separate cloud server (e.g., a cloud server of Amazon Web Services (AWS)).

In the embodiment shown in FIG. 12, the server 500 may incur costs during the process of inputting a predetermined prompt message to the external AI server 700 and acquiring the corresponding result. Accordingly, when the server 500 fine-tunes and trains the preprocessing module 310 and the personalization module 330 as much as possible in response to the feature command and stores the results in the database, the number of times the external AI server 700 is used can be reduced.

For example, in the embodiment of FIG. 12, when the server 500 fine-tunes and trains utterance data instead of using the costly GPT application protocol interface (API), the server 500 may process the feature commands using the internal modules 310 and 330 without using a GPT API.

The fine-tuning according to one embodiment of the present invention includes developing and applying a dedicated model specialized for a home appliance (e.g., a specific home appliance such as a refrigerator, an air conditioner, or the like) using a small language model (sLM).

When the performance of the AI chip installed in the home appliance 100 is ensured, the service may also be provided in the on-device format as shown in FIG. 10.

In addition, the theme module 320 according to one embodiment of the present invention may apply an LLM. For example, the theme module 320 may interpret the meaning of utterance using NLP and output corresponding intents and slots based on the input prompt and sample data.

The LLM such as GPT can provide overwhelming performance in terms of processing speed and data volume because the LLM is supported by a high-performance data center. Accordingly, the theme module 320 may be disposed within the server 500 or implemented in the external AI server 700 as shown in FIG. 12.

In one embodiment, the external AI server 700 is a server 700 that implements ChatGPT, MS Azure GPT, GPT-4o mini, or the like provided by Open AI. A query, for example, a prompt, may be input to the external AI server 700, and the results may be received using an API. For example, the counter theme module 325 of FIG. 12 may acquire a feature set corresponding to a feature command using the API provided by the theme module 320.

When the embodiment of the present invention is applied, the theme module 320 having AI that performs NLP, such as GPT, may identify the intent of the feature command uttered by the user and provide the result (feature set) indicating whether the user desires a recommendation or a specific feature combination.

In addition, when a prompt engineering technology is applied to the feature command to be input to the theme module 320, performance comparable to fine-tuning can be achieved through only prompt engineering without finely tunning the entire GPT AI model.

A mood-enhancing home appliance, for example, a refrigerator an air conditioner, may be combined with the generative AI (GPT) to accurately identify the intents of various user utterances and set desired features (e.g., a set of various color themes, voice tones (speech tones), and functions).

The preprocessing module 310 may pre-define a feature set corresponding to a specific utterance of the user and has been trained to recognize this, enabling it to quickly process commands for pre-defined features (e.g., a specific color theme).

Meanwhile, when the user desires a feature set not defined in the preprocessing module 310, the theme module 320, such as an LLM (GPT), may be applied. In this case, prompt engineering may also be applied to non-predefined commands (feature commands) to set a large number of feature sets. For example, when receiving a color command, the theme module 320 may recognize various natural language related to a color theme change and extract themes related to the color.

The theme module 320 may include one or more LLMs, such as Microsoft's GPT, a third-party LLM module, an LLM developed by LG, etc. In addition, the server 500 does not necessarily need to include the theme module 320, and the theme module 320 may be included in a separate LLM server provided by an external service provider or LG.

By applying the embodiment of the present invention, the server 500 may provide an accurate feature set by identifying the intent of the user input feature command through a structure that couples the LLM (GPT) server (theme module) to the recommendation AI server (personalization module) in addition to the NLP server (preprocessing module).

In one embodiment, when the user says, "Change a color to a so-cool color," the preprocessing module 310 may change the color set defined as a summer theme color to a summer theme color. In addition, when the user says, "The weather is really hot, change a color to a very cool color," and the corresponding color set is not defined in the preprocessing module 310, the theme module 320 may identify the user intent and generate a color theme.

That is, when the embodiment of the present invention is applied, the preprocessing module 310 and the theme module 320 may be coupled to identify the user intent and generate a feature set reflecting the intent. To this end, prompt engineering may be used to include the sample feature commands and the sample feature shots in the prompt, allowing the theme module 320 to generate feature values (e.g., color values) that reflect the user intent.

In addition, the theme module 320 may secure information on feature sets commonly accepted by the corresponding society or country. For example, the theme module 320 may provide a color therapy function and generate a color theme that may provide appropriate psychological stability when a user utters, "I'm feeling depressed, change the color."

Meanwhile, when the preprocessing module 310 and the theme module 320 fail to generate the feature set that corresponds to the user intent, the personalization module 330 may use user information (e.g., information on the device usage of the user) to provide a customized feature set based on the user's past or current feature set in the home appliance. In this case, the exterior of the home appliance may be changed to a color the user likes or prefers.

Since the theme module 320 does not store user-related information, the personalization module 330 may use user-related information to provide a user-specific feature set.

The personalization module 330 may generate a color theme suitable for the user when the user inputs a feature command, such as "Change a color to a color that suits me."

The recommendation AI server, which is an example of the personalization module 330, determines whether a user's utterance requires an AI recommendation through the theme module 320, for example, the LLM (GPT).

In addition, when it is determined that a recommendation is desired (e.g., when the feature set generated by the theme module such as an LLM does not meet the criteria), the recommendation AI server may recommend a color theme based on the usual usage patterns of the user.

For example, when the user desires a recommendation for a refrigerator color theme, the personalization module 330, for example, the recommendation AI server, may generate a color theme, thereby increasing a success rate of responding to the color theme change command (color command) of the user and enhancing satisfaction with the generated color theme.

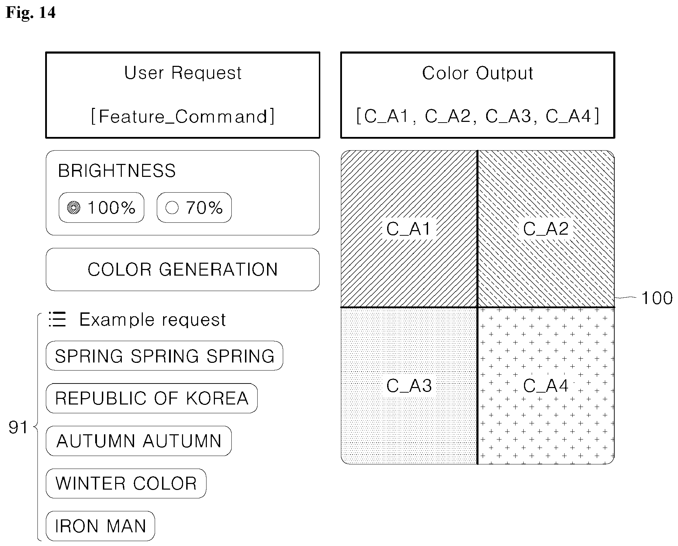

FIG. 14 is a view showing an interface for changing colors in response to user input commands according to one embodiment of the present invention.

The user inputs a feature command to a smartphone, a tablet, or a refrigerator 100a via voice or text. The feature command (Feature_Command) input in the "User Request" field may be displayed. For example, a command, such as "I'm angry, so change a color to a calming color," "Change a color to Iron Man color," or "Recommend a color that suits me today," is input.

The preprocessing module 310, the theme module 320, or the personalization module 330 of the server 500 or the home appliance 100a processes the input command and generates a color output. In FIG. 14, "C_A1, C_A2, C_A3, C_A4" is an example of a color set. In addition, each of the color sets may be applied to the exterior of the refrigerator 100a to which the colors will be applied. The order of application may be determined in advance.

91 may represent a theme of colors previously used by the user or represent the names of colors or the like that the preprocessing module 310 may process.

The user may input information on whether to maintain or change the applied color using the interface of the home appliance 100a or a smartphone/tablet. The input information (maintaining or changing) is stored in the personalization module 330.

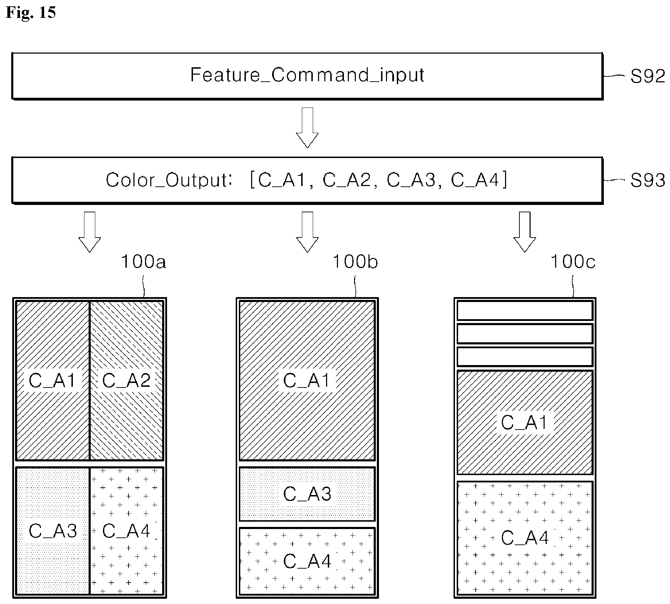

FIG. 15 is a view showing a process of changing colors of a plurality of home appliances according to one embodiment of the present invention.

The user inputs a feature command via voice (S92). For example, the user inputs a voice command such as "The weather is really hot, so change the color to a very cool theme!" using one of the home appliances 100a, 100b, and 100c or a smartphone/tablet (S92).

The server 500 or one of the home appliance 100a, 100b, and 100c performs the process described in FIG. 3 and the like and generates a feature set (e.g., a color set) corresponding to the feature command (S93). When the result is "[C_A1, C_A2, C_A3, C_A4]," the color set may be applied to a plurality of home appliances.

For example, all four colors are applied to the refrigerator 100a. On the other hand, a kimchi refrigerator 100b, which has three color panels, applies three colors, such as "[C_A1, C_A3, C_A4]." An air conditioner 100c applies two colors, such as "[C_A1, C_A4]."

When the user gives a single voice command, a consistent color theme may be applied to all home appliances 100a, 100b, and 100c in the home connected to the user's account on the server 500, for example, the ThinQ server.

In summary, in response to the feature command of the user, the home appliance 100 or the server 500 may apply one of the first feature set generated through the preprocessing module 310, the second feature set generated through the theme module 320, or the third feature set generated through the personalization module 330 to another home appliance connected to the user's account of the home appliance 100, thereby applying consistent features to home appliances owned or used by the user.

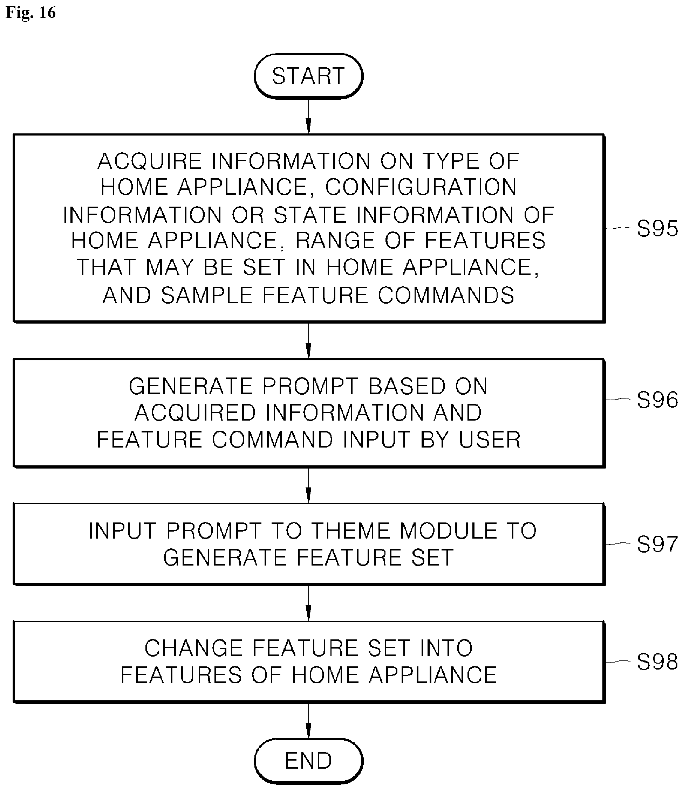

FIG. 16 is a view showing a process of changing features of a home appliance according to one embodiment of the present invention.

The process of FIG. 16 may be performed independently by one of the home appliance 100 or the server 500 or by both devices working together.

The home appliance 100 or the server 500 acquires information on the type of the home appliance, configuration information or state information of the home appliance, the range of features that may be set in the home appliance, and sample feature commands (S95). In addition, the home appliance 100 or the server 500 generates a prompt based on the acquired information and the feature command input by the user (S96). Then, the home appliance 100 or the server 500 inputs the prompt to the theme module 320 to generate a feature set (S97). In addition, the home appliance 100 or the server 500 changes the feature set into features of the home appliance (S98). The feature setting module 340 of the home appliance 100 may set the generated feature set as the features of the home appliance 100.

In one embodiment, when controlling the function of an air conditioner, the home appliance 100 or the server 500 may set various information on the air conditioner (information on type, configuration information, state information, the range of a controllable function, sample function control command).

In addition, the home appliance 100 or the server 500 may generate a prompt based on the acquired information and the feature commands related to the functions input by the user.

Thereafter, the home appliance 100 or the server 500 may input the prompt to the theme module 320 using an LLM as an example and then acquire a command (control command) for controlling the function. The theme module 320 may be implemented in the home appliance 100, the server 500, or the external server 700.

Thereafter, the home appliance 100 or the server 500 may control the air conditioner using the acquired control commands. During this process, the home appliance 100 or the server 500 may repeat the process of acquiring information (S95) to respond to subsequent feature commands.

Even though all components constituting the embodiments of the present invention have been described as being coupled or coupled and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments constituting the computer program can be easily inferred by those skilled in the art. Such a computer program may be stored in a computer-readable storage medium and read and executed by a computer, thereby implementing the embodiments of the present invention. The storage media for computer programs include magnetic recording media, optical recording media, and storage media including semiconductor recording devices. In addition, a computer program implementing the embodiments of the present invention includes program modules transmitted in real time through an external device.

The above description focuses on the embodiments of the present invention, but various changes and modifications may be made within the scope of those skilled in the art. Accordingly, it will be understood that these changes and modifications are included within the scope of the present invention as long as they do not depart from the scope of the present invention.

## Claims

1. A method of applying a feature set, in response to a feature command provided by a user, to a home appliance (100) or to a home appliance (100) in communication with a server (500), wherein the home appliance (100) and/or the server (500) includes stored thereon one or more standardized feature commands and one or more feature sets corresponding to the standardized feature commands;
the method comprising:
performing a first operation, by the server (500) or by the home appliance (100), wherein the first operation includes: comparing the feature command provided by the user and the one or more standardized feature commands, and determining, based on the comparing, a first feature set from the one or more stored feature sets, and a first accuracy for the first feature set;
performing a second operation, by the server (500) or the home appliance (100), when the first feature set is not determined or when the first accuracy is equal to or less than a first reference value, wherein the second operation includes: generating, by a theme module of the home appliance (100) or the server (500), a feature command corresponding to the feature command provided by the user, comparing the feature command generated by the theme module and the one or more standardized feature commands, and determining, based on the comparing, a second feature set from the one or more stored feature sets, and a second accuracy for the second feature set, corresponding to the feature command;
performing a third operation, by the server or the home appliance (100), when the second feature set is not determined or when the second accuracy is equal to or less than a second reference value, wherein the third operation includes: generating, by a personalization module of the home appliance (100) or the server (500), a feature command corresponding to the feature command provided by the user and/or the generated by the theme module, comparing the feature command generated by the personalization module and the one or more standardized feature commands, and determining, based on the comparing, a third feature set; and
performing a fourth operation of applying any one of the first feature set, the second feature set, or the third feature set to the home appliance (100).

2. The method of claim 1, wherein the second operation includes: providing the feature command provided by the user or information corresponding to the feature command provided by the user to the theme module; and/or
wherein the third operation includes: providing the feature command provided by the user and/or the generated by the theme module to the personalization module.

3. The method of claim 1 or 2, wherein the theme module is a LLM module or a generative AI module, and/or wherein the personalization module is a user preference prediction module or a recommendation AI module.

4. The method of any one of the preceding claims, wherein the feature command provided by the user is provided as a voice command and/or a text command.

5. The method of claim 4, wherein the feature command provided by the user is provided as a voice command, and wherein the method further includes converting the voice command to a corresponding text, by the home appliance or the server.

6. The method of any one of the preceding claims, wherein the standardized feature commands comprise one or more standardized words, and
wherein:
- the first accuracy is determined based on a match between the standardized words and the words of feature command provided by the user; and/or
- the second accuracy is determined based on a match between the standardized words and the words of feature command generated by the theme module, and/or
- the feature command generated by the personalization includes words that match the standardized words of one of the standardized feature commands.

7. The method of any one of the preceding claims, wherein the feature set includes any one of a color set, a speech set, a function set, and a combination thereof.

8. The method of claim 7, wherein:
- when the feature set is the color set, the feature set includes one or more names or identifiers of one or more colors; or includes one or more names or identifiers of one or more colors and one or more names or identifiers of one or more corresponding parts of the home appliance to which the one or more colors are to be applied; and/or
- when the feature set is the speech set, the feature set includes one or more names or identifiers of one or more voices, or includes one or more names or identifiers of one or more voices and one or more names or identifiers of one or more corresponding announcements made by the home appliance to which the one or more voices are to be applied; and/or.
- when the feature set is the function set, the feature set includes one or more names or identifiers of one or more functions or operations to be performed by the home appliance, or includes one or more names or identifiers of one or more functions or operations to be performed by the home appliance and a name or identifier of the home appliance by which the one or more functions or operations are to be performed.

9. The method of any one of the preceding claims, wherein the second operation includes inputting, by the server or the home appliance, a sample feature command, or a sample feature set corresponding to a sample feature command, or a sample feature command and a sample feature set corresponding to the sample feature command, to the theme module to generate the second feature set and the second accuracy.

10. The method of any one of the preceding claims, wherein in the third operation, the feature command generated by the personalization module is generated by using personalization information, wherein the personalization information includes at least one of: a user preference preset by the user, a user preference derived from history of previous use of the home appliance or of other similar or corresponding home appliances, user's personal data, and a combination thereof.

11. The method of any one of the preceding claims, further comprising:
storing, by the server or the home appliance, the feature command and the second feature set in a database according to a maintenance time or the number of applications of the second feature set; and
setting, by the server or the home appliance, the information stored in the database as the first feature set or the third feature set during the process of generating the first feature set or the third feature set in response to a feature command input after the fourth operation.

12. The method of any one of the preceding claims, further comprising:
receiving, by the server or the home appliance, a fine-tuning command for any one of the first feature set, the second feature set, or the third feature set and generating a fourth feature set;
storing the feature command and the fourth feature set in a database; and
setting, by the server or the home appliance, the fourth feature set stored in the database in the home appliance during the process of generating the feature set in response to a feature command input after the fourth operation.

13. The method of any one of the preceding claims, further comprises providing, by the server or the home appliance, any one of the first feature set, the second feature set, or the third feature set to another home appliance connected to a user account of the home appliance.

14. The method of any one of the preceding claims, further comprises inputting by the server or the home appliance, at least one of the type of home appliance targeted by the feature command, configuration information of the home appliance or state information of the home appliance, the range of features that may be set for the home appliance, and sample control commands to the theme module.

15. A server (500) comprising:
a preprocessing module (310); a theme module (320), and a personalization module (330), wherein the server (500) is configured to communicate with a home appliance (100) and is configured to perform the method according to any one of the preceding claims, and wherein the preprocessing module (310) is configured to perform the first operation of the method, the theme module (320) is configured to perform the second operation of the method, and the personalization module (330) is configured to perform the third operation of the method; or
a home appliance (100) comprising: a preprocessing module (310); a theme module (320), and a personalization module (330), wherein the home appliance (100) is configured to perform the method according to any one of the preceding claims, and wherein the preprocessing module (310) is configured to perform the first operation of the method, the theme module (320) is configured to perform the second operation of the method, and the personalization module (330) is configured to perform the third operation of the method; or
a system comprising a home appliance (100) and a server (500) configured to communicate with each other, the home appliance (100) and the server (500) of the system comprising: a preprocessing module (310); a personalization module (330), and a theme module (320) and/or a counter theme module (325), wherein the system is configured to perform the method according to any one of the preceding claims, and the preprocessing module (310) is configured to perform the first operation of the method, the theme module (320) and/or the counter theme module (325) is configured to perform the second operation of the method, and the personalization module (330) is configured to perform the third operation of the method.
